# EUROPEAN PATENT APPLICATION

(11) **EP 2 012 249 A1**
(43) Date of publication of application: **07.01.2009**
(21) Application number: 06732209.9
(22) Date of filing: 21.04.2006
(51) Int. Cl.: G06F 21/20, G06F 21/24

(54) **AUTHENTICATING SERVER DEVICE, TERMINAL DEVICE, AUTHENTICATING SYSTEM AND AUTHENTICATING METHOD**

(71) Applicant: MITSUBISHI DENKI KABUSHIKI KAISHA, Chiyoda-ku Tokyo 100-8310 (JP)
(72) Inventor: MORIMOTO, Hiroyuki, Chiyoda-ku, Tokyo 100-8310 (JP); MIWA, Shotaro, Chiyoda-ku, Tokyo 100-8310 (JP); MIYAZAKI, Kazuya, Chiyoda-ku, Tokyo 100-8310 (JP)
(74) Representative: Popp, Eugen
(86) International application number: PCT/JP2006/308451
(87) International publication number: WO 2007/122726

(57) **Abstract**

It is an object to identify, for example, a subject who generates a certain event in addition to certifying a time and/or a location of the event. A terminal device 200 sends positioning information and a time from a GPS satellite 103 and biometric information of a user to an authentication server device 300 to request for issuance of a certification code 104. The authentication server device 300 carries out biometric authentication of the user by comparing the biometric information received from the terminal device 200 with reference data of the user which is maintained beforehand. When the biometric authentication succeeds, the authentication server device 300 generates the certification code 104 by combining the reference data, the time, a hashed value of a weather satellite image, and the positioning information used for the biometric authentication. The terminal device 200 receives the certification code 104 from the authentication server device 300 and uses the certification code 104 received by outputting to a label, a photo, an IC (integrated circuit) tag, etc.

## Description

### Technical Field

The present invention relates to an authentication server device, a terminal device, an authentication system, and an authentication method. The invention relates to, in particular, a device, a system, and a method for providing location and time certifying information providing service. Further, the invention, in particular, relates to a security (personal identification) device, a system, and a method using biometric information.

### Background Art

As a method to certify a time, for example, a method is known in which time information showing a time and temporal change information that is certifying information of the time information and varies according to time change (weather data such as cloud image obtained by a weather satellite, for example) are synthesized to generate information and the information is used (refer to Patent Document 1, for example). The same can be said for a method to certify a location. As an actual service using such methods (location and time certifying information providing service), for example, COCO-DATES (registered trademark) service is provided (website URL <http://www.mitsubishielectric.co.jp/coco-dates/>).

Authentication devices using biometric information have been popularly used because of convenience such as no need to remember a password; no need to wear a device for authentication; and a fact that authentication can be done by measuring a targeted body part at a client. These devices form a system configuration of client-server form. A client sends biometric information measured to a server side. The server authenticates using the biometric information received and registered data on the server, and sends the authentication result back to the client. However, in this configuration, since the biometric information flows over the network, it is necessary to take some measures to prevent leak of the information (refer to Patent Document 2, for example). Further, since the biometric information received at the server side and the registered data on the server do not always completely match, it is necessary to take some measures not to generate an error in the authentication result (refer to Patent Document 3, for example).
Patent Document 1: JP2001-297062
Patent Document 2: JP2005-130384
Patent Document 3: JP2003-256376

### Disclosure of the Invention

### Problems to be Solved by the Invention

The above location and time certifying information providing service is to certify the time and the location. Namely, the conventional art certifies "when" and "where" a certain event (an action operated by a mobile phone, for example) occurs; however, it does not verify "by whom" the event occurs.

In case of biometric authentication, there is a problem that a risk of leakage of biometric information is large. Since biometric authentication information is exclusive personal information, which can hardly instantly be changed as a password even if the information is leaked, it is necessary to pay sufficient attention on maintaining confidentiality. However, to send the biometric information to a server at every time of authentication increases the risk of leakage. According to the conventional art disclosed in Patent Document 2, data converted from the biometric information is used, which prevents sending the biometric information itself. However, once the biometric information is stolen, there is a problem that impersonation can be done using the converted biometric information stolen before the expiration of registered data.

Further, judgmental standard of authentication in the biometric authentication is, different from password authentication, not perfect matching, but imperfect matching. If a matching rate is high, a person is identified as the same person; if a matching rate is low, a person is recognized as another person. As shown in the conventional art disclosed in Patent Document 3, in a system the authentication is done by only a server, multiple authentication processes may be required including retries because of imperfect matching property of the biometric authentication, which causes waiting time including communicating and processing time between the client and the server.

The present invention aims to, for example, identify a subject who has generated a certain event in addition to certifying the time and/or the location of the event. Further, another object of the present invention is, for example, to reduce possibility of authentication failure in the biometric authentication, eliminate processing time, decrease the risk of leakage of biometric information at the time of sending the biometric information to the server via the network.

### Means to Solve the Problems

An authentication server device according to the present invention includes:
a user specifying information inputting unit inputting using an inputting device unique user specifying information which can be obtained only from a user;
a user authenticating unit authenticating using a processing device the user based on the user specifying information inputted by the user specifying information inputting unit;
a time information inputting unit inputting time information showing a time using the inputting device;
a time specifying information inputting unit inputting using the inputting device unique time specifying information which can be obtained only at a time shown by the time information inputted by the time information inputting unit;
an authentication information generating unit, when the user is authenticated by the user authenticating unit, generating authentication information by synthesizing using the processing device authentication result information showing that the user has been authenticated, the time information inputted by the time information inputting unit, and the time specifying information inputted by the time specifying information inputting unit.

The authentication server device further includes:
an information keeping unit storing in a memory device the authentication result information, the time information, and the time specifying information which have been synthesized by the authentication information generating unit by making correspondence with the authentication information generated by the authentication information generating unit;
an authentication information outputting unit outputting using an outputting device the authentication information generated by the authentication information generating unit;
an authentication information inputting unit inputting using the inputting device the authentication information outputted by the authentication information outputting unit;
an information searching unit retrieving the authentication result information, the time information, and the time specifying information corresponding to the authentication information inputted by the authentication information inputting unit from the memory device as search result information; and
a search result information outputting unit outputting using the outputting device the search result information retrieved by the information searching unit.

The authentication server device further includes a user information storing unit storing in the memory device user information related to the user,
the authentication result information is identification information identifying the user information stored by the user information storing unit, and
the information searching unit retrieves the identification information as the authentication result information corresponding to the authentication information inputted by the authentication information inputting unit, and retrieves the user information identified by the identification information retrieved, the time information and the time specifying information corresponding to the authentication information inputted by the authentication information inputting unit as the search result information from the memory device.

The user specifying information inputting unit obtains and inputs the user specifying information from a terminal device including a biometric information obtaining unit obtaining biometric information of the user, a terminal authenticating unit authenticating the user based on the biometric information obtained by the biometric information obtaining unit, and a biometric information outputting unit outputting the biometric information obtained by the biometric information obtaining unit as the user specifying information when the user is authenticated by the terminal authenticating unit.

The user specifying information inputting unit obtains the biometric information from each terminal device out of a plurality of terminal devices, and
the biometric information differs from one terminal device to another in at least one of accuracy and type.

The authentication server device further includes:
a format selecting unit selecting using the processing device a format of the biometric information to be outputted by the biometric information outputting unit; and
a format information outputting unit outputting using the outputting device format information showing the format selected by the format selecting unit,
the biometric information outputting unit of the terminal device converts the biometric information obtained by the biometric information obtaining unit to the format shown by the format information outputted by the format information outputting unit and outputs it, and
the user authenticating unit converts using the processing device the user specifying information inputted by the user specifying information inputting unit from the format selected by the format selecting unit to an original format, and authenticates the user based on the user specifying information converted.

The format selecting unit, in selecting a format of biometric information to be outputted by the biometric information outputting unit of a same terminal device again, selects a format corresponding to a matrix obtained by rotating a matrix corresponding to the format selected previously by 90 degrees on vector space.

The authentication server device further includes:
a location information inputting unit inputting location information showing a location using the inputting device; and
a location specifying information inputting unit inputting using the inputting device unique location specifying information which can be obtained only at the location shown by the location information inputted by the location information inputting unit,
the authentication information generating unit generates the authentication information by synthesizing the authentication result information showing that the user has been authenticated, the time information inputted by the time information inputting unit, the time specifying information inputted by the time specifying information inputting unit, the location information inputted by the location information inputting unit, and the location specifying information inputted by the location specifying information inputting unit.

Further, an authentication server device according to the present invention includes:
a user specifying information inputting unit inputting using an inputting device unique user specifying information which can be obtained only from a user;
a user authenticating unit authenticating using a processing device the user based on the user specifying information inputted by the user specifying information inputting unit;
a location information inputting unit inputting location information showing a location using the inputting device;
a location specifying information inputting unit inputting using the inputting device unique location specifying information which can be obtained only at the location shown by the location information inputted by the location information inputting unit; and
an authentication information generating unit, when the user is authenticated by the user authenticating unit, generating authentication information by synthesizing using the processing device authentication result information showing that the user has been authenticated, the location information inputted by the location information inputting unit, and the location specifying information inputted by the location specifying information inputting unit.

A terminal device according to the present invention includes:
a biometric information obtaining unit obtaining biometric information of a user using a biometric authentication device;
a terminal authenticating unit authenticating using a processing device the user based on the biometric information obtained by the biometric information obtaining unit;
a biometric information outputting unit outputting using an outputting device the biometric information obtained by the biometric information obtaining unit as the user specifying information to an authentication server device including a user specifying information inputting unit inputting unique user specifying information which can be obtained only from the user and a user authenticating unit authenticating the user based on the user specifying information inputted by the user specifying information inputting unit when the user is authenticated by the terminal authenticating unit.

The terminal device further includes a biometric information storing unit storing valid biometric information of the user in a memory device,
the biometric information obtaining unit obtains the biometric information of the user at least two times,
the terminal authenticating unit, every time the biometric information of the user is obtained by the biometric information obtaining unit, generates authentication rate information by quantifying using the processing device a rate of matching between the biometric information obtained by the biometric information obtaining unit and the biometric information stored by the biometric information storing unit, and
the biometric information outputting unit selects using the processing device and outputs the biometric information obtained by the biometric information obtaining unit based on the authentication rate information calculated by the terminal authenticating unit.

The biometric information outputting unit thins and outputs the biometric information obtained by the biometric information obtaining unit.

The authentication server device further includes a format selecting unit selecting a format of the biometric information to be outputted by the biometric information outputting unit; and a format information outputting unit outputting format information showing the format selected by the format selecting unit, and
the biometric information outputting unit converts using the processing device to the format shown by the format information outputted by the format information outputting unit and outputs the biometric information obtained by the biometric information obtaining unit.

An authentication system according to the present invention includes the authentication server device and the terminal device.

An authentication method according to the present invention includes:
by a user specifying information inputting unit of an authentication server device, obtaining from a terminal device and inputting unique user specifying information which can be obtained only from the user;
by a user authenticating unit of the authentication server device, authenticating using a processing device of the authentication server device the user based on the user specifying information inputted by the user specifying information inputting unit ;
by a time information inputting unit of the authentication server device, obtaining from the terminal device and inputting time information showing a time;
by a time specifying information inputting unit of the authentication server device, inputting unique time specifying information which can be obtained at the time shown by the time information inputted by the time information inputting unit; and
by an authentication information generating unit of the authentication server device, when the user is authenticated by the user authenticating unit, generating authentication information by synthesizing using the processing device of the authentication server device authentication result information showing that the user has been authenticated, the time information inputted by the time information inputting unit, and the time specifying information inputted by the time specifying information inputting unit.

The authentication method further includes:
by an information keeping unit of the authentication server device, storing in a memory device of the authentication server device the authentication result information, the time information, and the time specifying information which have been synthesized by the authentication information generating unit by making correspondence with the authentication information generated by the authentication information generating unit;
by an authentication information outputting unit of the authentication server device, outputting the authentication information generated by the authentication information generating unit to the terminal device;
by an authentication information inputting unit of the authentication server device, obtaining from the terminal device and inputting the authentication information outputted by the authentication information outputting unit;
by an information searching unit of the authentication server device, retrieving the authentication result information, the time information, and the time specifying information corresponding to the authentication information inputted by the authentication information inputting unit from the memory device of the authentication server device as search result information; and
by a search result information outputting unit of the authentication server device, outputting to the terminal device the search result information retrieved by the information searching unit.

The authentication method further includes:
by a user information storing unit of the authentication server device, storing in the memory device of the authentication server device user information related to the user,
the authentication result information is identification information identifying the user information stored by the user information storing unit, and
the information searching unit of the authentication server device retrieves the identification information as the authentication result information corresponding to the authentication information inputted by the authentication information inputting unit, and retrieves from the memory device of the authentication server device the user information identified by the identification information retrieved, the time information and the time specifying information corresponding to the authentication information inputted by the authentication information inputting unit as the search result information.

The authentication server method further includes:
by a biometric information obtaining unit of the terminal device, obtaining the biometric information of the user;
by a terminal authenticating unit of the terminal device, authenticating using a processing device of the terminal device the user based on the biometric information obtained by the biometric information obtaining unit; and
by a biometric information outputting unit of the terminal device, when the user has been authenticated by the terminal authenticating unit, outputting the biometric information obtained by the biometric information obtaining unit to the authentication server device as the user specifying information,
the user specifying information inputting unit of the authentication server device obtains from the terminal device and inputs the user specifying information.

The user specifying information inputting unit of the authentication server device obtains the biometric information from each terminal device out of a plurality of terminal devices, and
the biometric information differs from one terminal device to another in at least one of accuracy and type.

The authentication method further includes:
by a biometric information storing unit of the terminal device, storing in a memory device of the terminal device valid biometric information of the user,
the biometric information obtaining unit of the terminal device obtains the biometric information of the user at least two times,
the terminal authenticating unit of the terminal device, every time the biometric information of the user is obtained by the biometric information obtaining unit, generates authentication rate information by quantifying using the processing device of the terminal device a rate of matching between the biometric information obtained by the biometric information obtaining unit and the biometric information stored by the biometric information storing unit, and
the biometric information outputting unit of the terminal device selects using the processing device of the terminal device and outputs to the authentication server device the biometric information obtained by the biometric information obtaining unit based on the authentication rate information calculated by the terminal authenticating unit.

The biometric information outputting unit of the terminal device thins and outputs the biometric information obtained by the biometric information obtaining unit.

The authentication server method further includes:
by a format selecting unit of the authentication server device, selecting using the processing device of the authentication server device a format of the biometric information to be outputted by the biometric information outputting unit; and
by a format information outputting unit of the authentication server device, outputting format information showing the format selected by the format selecting unit to the terminal device,
the biometric information outputting unit of the terminal device converts using the processing device of the terminal device the biometric information obtained by the biometric information obtaining unit to the format shown by the format information outputted by the format information outputting unit and outputs it to the authentication server device, and
the user authenticating unit of the authentication server device converts using the processing device of the authentication server device the user specifying information inputted by the user specifying information inputting unit from the format selected by the format electing unit to an original format and authenticates the user based on the user specifying information converted.

The format selecting unit of the authentication server device, in selecting a format of biometric information to be outputted by the biometric information outputting unit of a same terminal device again, selects a format corresponding to a matrix obtained by rotating a matrix corresponding to the format selected previously by 90 degrees on vector space.

The authentication server method further includes:
by a location information inputting unit of the authentication server device, obtaining from the terminal device and inputting location information showing a location; and
by a location specifying information inputting unit of the authentication server device, inputting unique location specifying information which can be obtained only at the location shown by the location information inputted by the location information inputting unit,
the authentication information generating unit of the authentication server device generates the authentication information by synthesizing authentication result information showing that the user has been authenticated, the time information inputted by the time information inputting unit, the time specifying information inputted by the time specifying information inputting unit, the location information inputted by the location information inputting unit, and the location specifying information inputted by the location specifying information inputting unit.

An authentication method according to the present invention includes:
by a user specifying information inputting unit of an authentication server device, obtaining from a terminal device and inputting unique user specifying information which can be obtained only from a user;
by a user authenticating unit of the authentication server device, authenticating using a processing device of the authentication server device the user based on user specifying information inputted by the user specifying information inputting unit;
by a location information inputting unit of the authentication server device, obtaining from the terminal device and inputting location information showing a location;
by a location specifying information inputting unit of the authentication server device, inputting unique location specifying information which can be obtained only at the location shown by the location information inputted by the location information inputting unit; and
by an authentication information generating unit of the authentication server device, when the user is authenticated by the user authenticating unit, generating authentication information by synthesizing using the processing device of the authentication server device authentication result information showing that the user has been authenticated, the location information inputted by the location information inputting unit, and the location specifying information inputted by the location specifying information inputting unit.

### Effect of the Invention

According to the present invention, in an authentication server device, an authentication information generating unit, when a user is authenticated by a user authenticating unit, generates authentication information by synthesizing using a processing device authentication result information showing the user has been authenticated, time information inputted by a time information inputting unit, and time specifying information inputted by a time specifying information inputting unit, which enables to identify a subject who has generated a certain event in addition to certification of the time of the event.

### Preferred Embodiments for Carrying out the Invention

In the following, embodiments according to the present invention will be explained by referring to the figures.

### Embodiment 1.

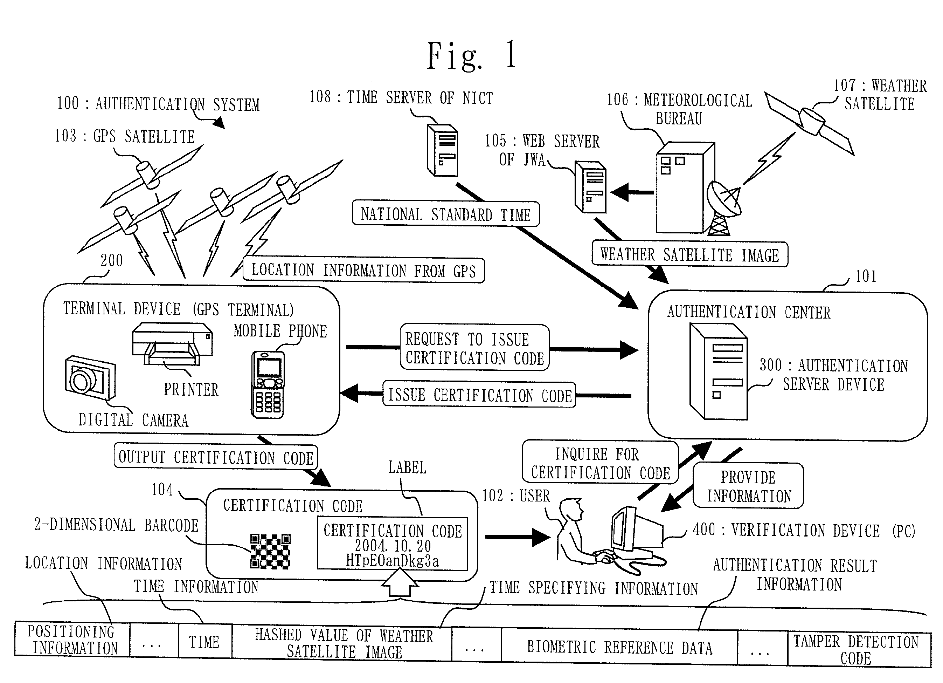

Fig. 1 is a diagram showing an authentication system 100 according to the present embodiment.

In this embodiment, the authentication system 100 includes a terminal device 200 (also called as "a client"), an authentication server device 300 (also called as "a server" or "an authentication server"), and a verification device 400. The terminal device 200 is a terminal (GPS terminal) having a GPS (Global Positioning System) function. The terminal device 200 is, for example, a mobile phone, a digital camera, or a printer. The authentication server device 300 is a computer placed at an authentication center 101. The verification device 400 is, for example, a PC (personal computer). The terminal device 200, the authentication server device 300, and the verification device 400 mutually communicate over a network such as a mobile communication network, a WAN (Wide Area Network), a LAN (Local Area Network), and the Internet.

In the authentication system 100, the authentication server device 300 provides service of certifying time and location and of personal identification. A user of the terminal device 200 can obtain a third party certification information of time, location, and personal identification related to a certain event (an action operated by the terminal device 200) by using the service provided by the authentication server device 300. It becomes possible for the user, for example, to certify "when, where, and by whom" shipment is done by putting the third party certification information to a label of a product when the product is shipped. Further, it is also possible to apply the third party certification information to various certification procedure when the user enters to a certain service (for example, personal identification for opening a bank account, requesting an issuance of a debit card or a credit card). On the other hand, a user 102 of the verification device 400 can confirm time and location of a certain event and personal identification of a subject who has generated the event by referring to the third party certification information. It becomes possible for the user 102 to confirm "when, where, and by whom" shipment of a certain product has been done by, for example, referring to the third party certification information put to a label of the product. Further, it is possible to confirm "when, where, and by whom" a certain photo has been taken by, for example, referring to the third party certification information put to the photo.

When a user of the terminal device 200 uses the above service, the terminal device 200 receives positioning information (longitude and latitude) and time from a GPS satellite 103. Further, the terminal device 200 obtains biometric information of the user. The terminal device 200 sends the positioning information, the time, and the biometric information to the authentication server device 300 to request an issuance of a certification code 104 which becomes the above third party certification information. On receiving the positioning information, the time, and the biometric information from the terminal device 200, the authentication server device 300 carries out biometric authentication of the user by comparing the received biometric information with reference data of the user that is maintained beforehand. Further, the authentication server device 300 obtains a weather satellite image from a web server 105 of the Japan Weather Association (an image of clouds received by a meteorological bureau 106 from a weather satellite 107 is open to general by the Japan Weather Association) and encodes (hashes) the obtained weather satellite image. Here, the authentication server device 300 can also confirm that the time received from the terminal device 200 is not improper by previously synchronizing its system clock to a national standard time transmitted from a time server 108 of the NICT (National Institute of Information and Communications Technology). If the biometric authentication succeeds, the authentication server device 300 generates a certification code 104 by combining the reference data (an example of authentication result information discussed later) used for the biometric authentication, the time (an example of time information discussed later), a hashed value of the weather satellite image (an example of time specifying information discussed later), and the positioning information (an example of location information discussed later) and quantifying with a hash function. The authentication server device 300 can also combine natural phenomena information such as temperature, humidity, barometric pressure, altitude, wind velocity, etc. (an example of location specifying information discussed later) to the certification code 104. The authentication server device 300 can also combine tamper detection codes such as a checksum, a humming code, a CRC (Cyclic Redundancy Check), an electronic signature, an HMAC (Keyed-Hashing for Message Authentication), etc. to the certification code 104. The authentication server device 300 issues the certification code 104 generated above as the third party certification information requested by the terminal device 200. The terminal device 200 receives the certification code 104 from the authentication server device 300 and uses the certification code 104 received by outputting to a label, a photo, an IC (integrated circuit) tag, etc. The terminal device 200 can also output the certification code 104 as 2-dimensional barcodes such as a QR code (registered trademark), and the like.

On using the above service, the user 102 inputs the certification code 104 put on the label, etc. to the verification device 400. The verification device 400 inquires for the certification code 104 inputted to the authentication server device 300. The authentication server device 300 stores information such as the reference data, the time, the weather satellite image, the positioning information, etc. used for generating the certification code 104 in a database on issuing the certification code 104. Therefore, it is possible to retrieve information corresponding to the certification code 104 inquired by the verification device 400 from the database and provide to the verification device 400. The verification device 400 displays the information provided by the authentication server device 300 on a screen. In this way, the user 102 can confirm, for example, "when, where, and by whom" the label has been issued.

As discussed above, in the present embodiment, the certification code 104 issued by the authentication server device 300 includes an objective evidence by biometric verification data (the biometric information obtained by the terminal device 200) in addition to the positioning information from the GPS satellite 103 and the weather satellite image from the weather satellite 107. Because of this, the authentication system 100 can accomplish the third party certification of time, location and personal identification. Further, since it is difficult to forge the biometric verification data, impersonation can be prevented in personal identification.

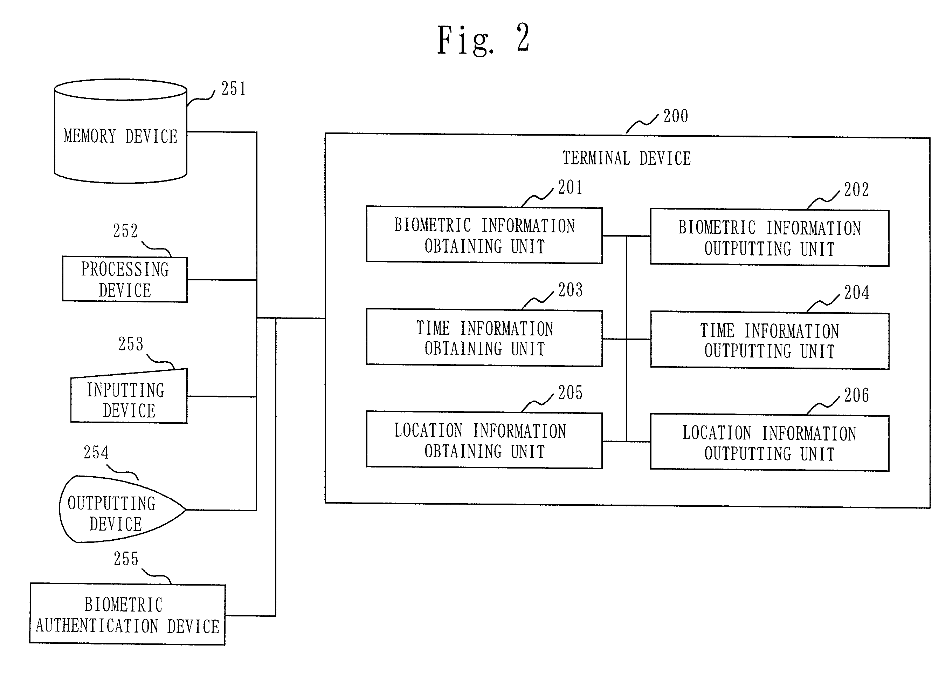

Fig. 2 is a block diagram showing a configuration of the terminal device 200 according to the present embodiment. As shown in Fig. 1, the terminal device 200 is, for example, a mobile phone with a camera having a GPS function.

In this embodiment, the terminal device 200 includes a biometric information obtaining unit 201, a biometric information outputting unit 202, a time information obtaining unit 203, a time information outputting unit 204, a location information obtaining unit 205, and a location information outputting unit 206. Further, the terminal device 200 includes hardware devices such as a memory device 251, a processing device 252, an inputting device 253, an outputting device 254, and a biometric authentication device 255 (or these hardware devices are connected to the terminal device 200). These hardware devices are used by each unit of the terminal device 200. Tamper resistant devices can be used for each unit or each hardware device of the terminal device 200.

The biometric information obtaining unit 201 obtains biometric information of a user by the biometric authentication device 255. For example, the biometric information obtaining unit 201 takes a photo of a face of the user by a camera (an example of the biometric authentication device 255) and obtains image data of the face (an example of the biometric information). The biometric information obtaining unit 201 can obtain image data of fingerprints of the user by a fingerprint sensor (an example of the biometric authentication device 255). The biometric information obtaining unit 201 can obtain vein data of a palm of the user by a vein sensor (an example of the biometric authentication device 255). The biometric information obtaining unit 201 can obtain image data of an eye ball (iris) of the user by the camera. The biometric information obtaining unit 201 can obtain voice data of voice of the user by a microphone (an example of the biometric authentication device 255). The biometric information obtaining unit 201 can obtain image data of an ear of the user by the camera. The biometric information outputting unit 202 outputs by the outputting device 254 the biometric information obtained by the biometric information obtaining unit 201 to the authentication server device 300. For example, the biometric information outputting unit 202 sends the image data of the face over the mobile communication network. Here, the biometric information outputting unit 202 can output user identification information such as a user ID (identifier), a membership number, a password, a security code, etc. inputted by an inputting unit, not illustrated, using the inputting device 253. Further, it can output an electronic certificate stored in the memory device 251 previously by a memory unit, not illustrated. The biometric information, the user identification information, the electronic certificate, etc. are generally unique information that can be obtained only from the user. Hereinafter, such information is referred to as user specifying information.

The time information obtaining unit 203 obtains time information showing the time by the inputting device 253. The location information obtaining unit 205 obtains location information showing the location by the inputting device 253. For example, the time information obtaining unit 203 and the location information obtaining unit 205 obtain the time information and the location information from the GPS satellite 103 via a GPS module (an example of the inputting device 253), respectively. The time information outputting unit 204 outputs by the outputting device 254 the time information obtained by the time information obtaining unit 203 to the authentication server device 300. The location information outputting unit 206 outputs by the outputting device 254 the location information obtained by the location information obtaining unit 205 to the authentication server device 300. For example, the time information outputting unit 204 and the location information outputting unit 206 send the time information and the location information to the authentication server device 300 via the mobile communication network.

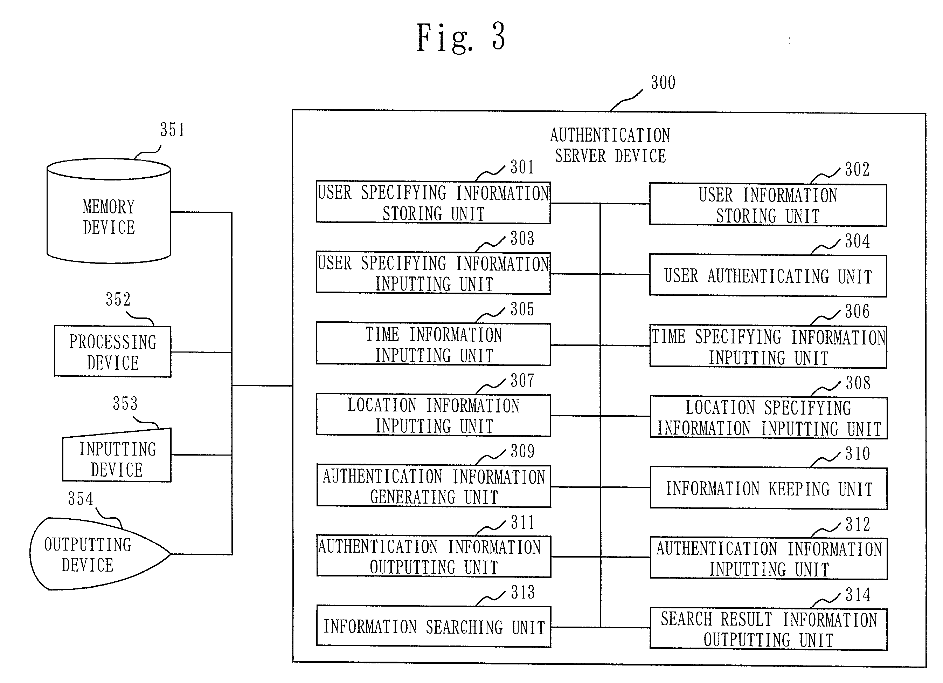

Fig. 3 is a block diagram showing a configuration of the authentication server device 300 according to the present embodiment.

In this embodiment, the authentication server device 300 includes a user specifying information storing unit 301, a user information storing unit 302, a user specifying information inputting unit 303, a user authenticating unit 304, a time information inputting unit 305, a time specifying information inputting unit 306, a location information inputting unit 307, a location specifying information inputting unit 308, an authentication information generating unit 309, an information keeping unit 310, an authentication information outputting unit 311, an authentication information inputting unit 312, an information searching unit 313, and a search result information outputting unit 314. Further, the authentication server device 300 includes hardware devices such as a memory device 351, a processing device 352, an inputting device 353, and an outputting device 354 (or these hardware devices are connected to the authentication server device 300). These hardware devices are used by each unit of the authentication server device 300.

The user specifying information storing unit 301 stores valid user specifying information in the memory device 351 beforehand. For example, the user specifying information storing unit 301 registers image data of a face, a user ID, a membership number, a password, a security code, an electronic certificate of the user himself/herself in a database (an example of the memory device 351). For this database, the authentication server device 300 can also use database of another system (a database placed at other than the authentication center 101 shown in Fig. 1, for example). The user information storing unit 302 stores the user information related to the user in the memory device 351 beforehand. For example, the user information storing unit 302 registers the user ID, personal information of the user, information showing "who" is the user (all are examples of the user information) or data generated by encrypting or hashing such information in the database.

The user specifying information inputting unit 303 inputs the user specifying information by the inputting device 353. For example, the user specifying information inputting unit 303 receives the image data of the face of the user from the terminal device 200 via the network. The user authenticating unit 304 authenticates the user by the processing device 352 based on the user specifying information inputted by the user specifying information inputting unit 303. For example, the user authenticating unit 304 authenticates the user by comparing the user specifying information inputted by the user specifying information inputting unit 303 with the user specifying information stored by the user specifying information storing unit 301.

The time information inputting unit 305 inputs time information by the inputting device 353. The time specifying information inputting unit 306 inputs time specifying information by the inputting device 353. The time specifying information is unique data which can be obtained only at the time shown by the time information inputted by the time information inputting unit 305. The location information inputting unit 307 inputs location information by the inputting device 353. The location specifying information inputting unit 308 inputs location specifying information by the inputting device 353. The location specifying information is unique data which can be obtained only at the location shown by the location information inputted by the location information inputting unit 307. For example, the time information inputting unit 305, the location information inputting unit 307, and the location specifying information inputting unit 308 receive time information, location information, and the above-discussed natural phenomena information by the terminal device 200 via the network. If the location information which the location information inputting unit 307 receives from the terminal device 200 is information obtained by the GPS satellite 103, it is difficult to obtain the location information unless the receiver is at the location shown by the location information. Therefore, in this case, the location specifying information inputting unit 308 can use the location information which the location information inputting unit 307 receives from the terminal device 200 as the location specifying information. Further, for example, when the time information is inputted by the time information inputting unit 305, the time specifying information inputting unit 306 receives a weather satellite image from the web server 105 shown in Fig. 1 via the Internet.

When the user is authenticated by the user authenticating unit 304, the authentication information generating unit 309 generates authentication result information by the processing device 352. The authentication result information is information showing that the user has been authenticated. It is also possible to use identification information identifying user information stored by the user information storing unit 302 as the authentication result information. The authentication information generating unit 309 generates the authentication information by synthesizing by the processing device 352 the authentication result information generated, the time information inputted by the time information inputting unit 305, and the time specifying information inputted by the time specifying information inputting unit 306. The authentication information generating unit 309 can also generate the authentication information by synthesizing the authentication result information, the location information inputted by the location information inputting unit 307, and the location specifying information inputted by the location specifying information inputting unit 308. Further, the authentication information generating unit 309 can also generate the authentication information by synthesizing the authentication result information, the time information, the location information, and at least one of the time specifying information and the location specifying information. For example, the authentication information generating unit 309 generates a certification code 104 shown in Fig. 1 as the authentication information. As discussed above, the authentication information generating unit 309 does not need to synthesize the time specifying information to the certification code 104 when there is no need to certify the time. Further, it is not necessary to synthesize the time information to the certification code 104. In addition, when there is no need to certify the location, it is not necessary to synthesize the location specifying information to the certification code 104. Further, it is not necessary to synthesize the location information to the certification code 104. Among the authentication result information, the time information, the time specifying information, the location information, and the location specifying information, the information keeping unit 310 stores information synthesized by the authentication information generating unit 309 in the memory device 351 by making correspondence with the authentication information generated by the authentication information generating unit 309. For example, the information keeping unit 310 stores the authentication result information, the time information, the time specifying information, and the location information in the database using the certification code 104 as a key. Further, the information keeping unit 310 also stores the location specifying information in the database using the certification code 104 as a key. The authentication information outputting unit 311 outputs the authentication information generated by the authentication information generating unit 309 by the outputting device 354. For example, the authentication information outputting unit 311 sends the certification code 104 to the terminal device 200 via the network.

The authentication information inputting unit 312 inputs by the inputting device 353 the authentication information outputted by the authentication information outputting unit 311. For example, the authentication information inputting unit 312 receives the certification code 104 from the verification device 400 shown in Fig. 1 via the Internet. The information searching unit 313 retrieves the authentication result information, the time information, the time specifying information, the location information, and the location specifying information corresponding to the authentication information inputted by the authentication information inputting unit 312 from the memory device 351 as search result information. For example, the information searching unit 313 searches the database using the certification code 104 as a key and outputs the search result. When the authentication result information is identification information identifying the user information, the information searching unit 313 retrieves the identification information as the authentication result information corresponding to the certification code 104 from the database. Then, the information searching unit 313 retrieves the user information identified by the retrieved identification information from the database and outputs the retrieved user information together with other search result. The information searching unit 313 can output the retrieved identification information itself as a part of the search result instead of the user information. The search result information outputting unit 314 outputs by the outputting device 354 the search result information retrieved by the information searching unit 313. For example, the search result information outputting unit 314 sends the search result outputted by the information searching unit 313 to the verification device 400 via the Internet.

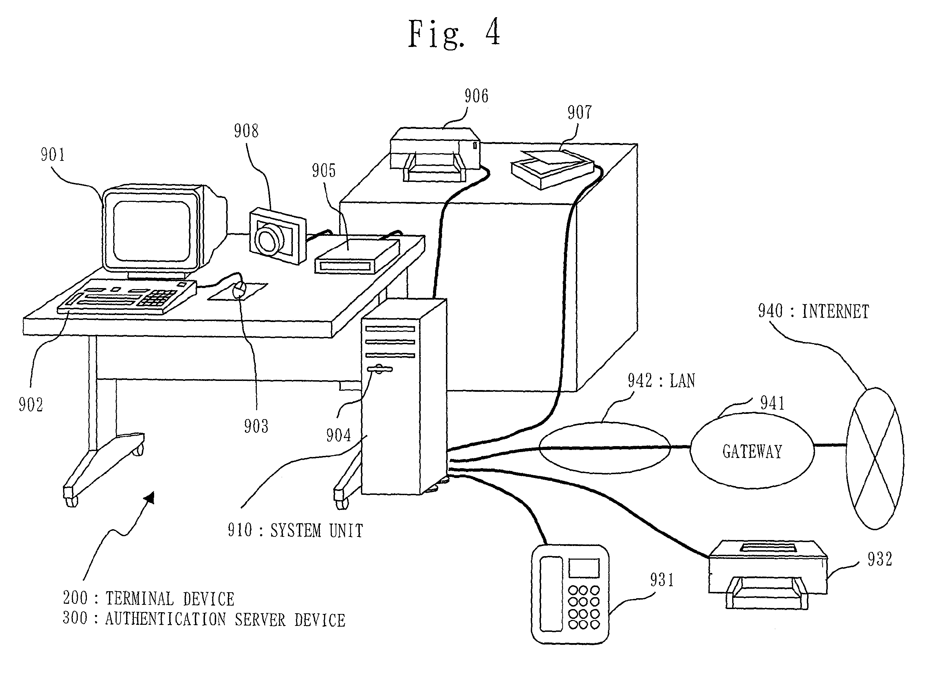

Fig. 4 shows an example of an external appearance of the terminal device 200 and the authentication server device 300.

In Fig. 4, the terminal device 200 and the authentication server device 300 include hardware resource such as a system unit 910, a display device 901 having a display screen of CRT (Cathode Ray Tube) or LCD (Liquid Crystal Display), a keyboard 902 (K/B), a mouse 903, an FDD 904 (Flexible Disk Drive), a CDD 905 (Compact Disc Drive), a printer device 906, a scanner device 907, a picture taking device 908 such as a digital camera and a video camera, etc., which are connected with a cable or a signal line. A system unit 910 is a computer, which is connected to a telephone 931, a facsimile machine 932 (FAX) with a cable and further connected to the Internet 940 via a LAN 942 (Local Area Network) and a gateway 941.

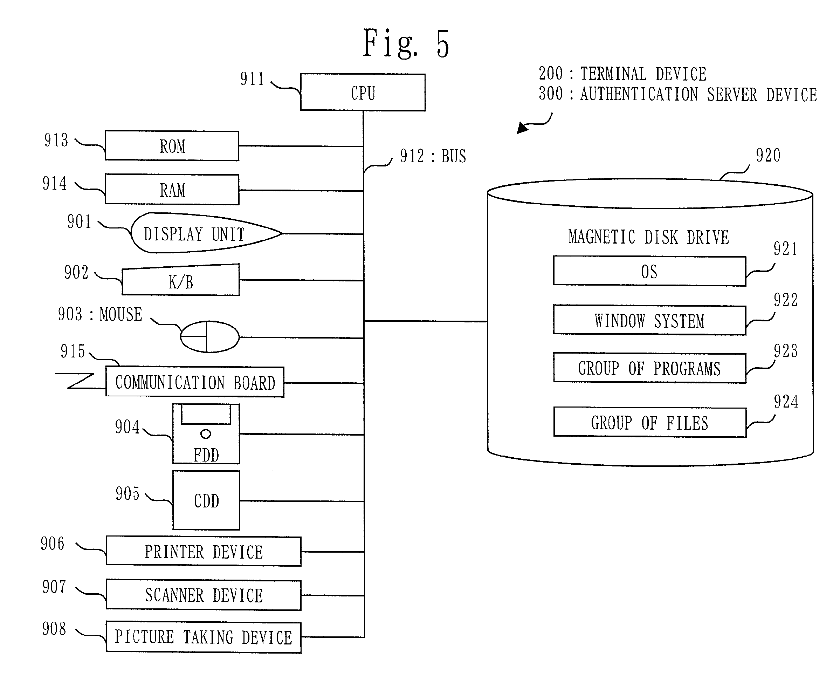

Fig. 5 shows an example of hardware resource of the terminal device 200 and the authentication server device 300.

In Fig. 5, the terminal device 200 and the authentication server device 300 include a CPU 911 (Central Processing Unit, also called as a central processing unit, an operation unit, a micro-processor, a micro-computer, and a processor) executing programs. The CPU 911 is an example of the processing devices 252, 352, or the processing unit. The CPU 911 is connected to a ROM 913 (Read Only Memory), a RAM 914 (Random Access Memory), a communication board 915, the display device 901, the keyboard 902, the mouse 903, the FDD 904, the CDD 905, the printer device 906, the scanner device 907, the picture taking device 908, and a magnetic disk drive 920 via a bus 912 and controls these hardware devices. Recording medium such as an optical disk drive, a memory card reader/writer, etc. can be used instead of the magnetic disk drive 920.

The RAM 914 is an example of volatile memories. The recording medium of the ROM 913, the FDD 904, the CDD 905, and the magnetic disk drive 920 are examples of non-volatile memories. These are examples of the memory devices 251, 351, or the memory unit. The communication board 915, the keyboard 902, the scanner device 907, the picture taking device 908, the FDD 904, etc. are examples of the inputting devices 253, 353, or the inputting unit. Further, the communication board 915, the display device 901, the printer device 906, etc. are examples of the outputting devices 254, 354, or the outputting unit. Further, the picture taking device 908, etc. is an example of the biometric authentication device 255 or a biometric authentication unit.

The communication board 915 is connected to the telephone 931, the facsimile machine 932, the LAN 942, etc. The communication board 915 can be connected not only to the LAN 942, but also to the Internet 940, a WAN (Wide Area Network) such as an ISDN (Integrated Services Digital Network), etc. If it is connected to the Internet 940, the WAN, etc., the gateway 941 is unnecessary.

The magnetic disk drive 920 stores an operating system 921 (OS), a window system 922, a group of programs 923, and a group of files 924. Programs of the group of programs 923 are executed by the CPU 911, the operating system 921, and the window system 922. The group of programs 923 stores programs executing functions explained by "-- unit" or "-- means" in this embodiment. The programs are read and executed by the CPU 911. Further, the group of files 924 stores data, information, a signal value, a variable value, or a parameter explained by "-- data", "-- information", "-- ID", "-- flag", or "-- result" in this embodiment as each item of "-- file", "-database" or "-- table". "-- file", "-- database" or "-- table" are stored in the recording medium such as disks or memories. Data, information, a signal value, a variable value, or a parameter stored in the recording medium such as the disks and the memories are read by the CPU 911 via a reading/writing circuit to a main memory or a cache memory and used for processing (operation) of the CPU 911 such as extraction, search, reference, comparison, operation, calculation, control, output, print, display, etc. During processing by the CPU 911 such as extraction, search, reference, comparison, operation, calculation, control, output, print, display, etc., the data, the information, the signal value, the variable value, or the parameter are temporarily stored in the main memory, the cache memory, or a buffer memory.

Further, arrows in the block diagrams or the flowcharts used for explaining the present embodiment mainly show inputs/outputs of data and signals, and the data and signals are recorded in a memory such as the RAM 914 and the recording medium such as a flexible disk (FD) of the FDD 904, a compact disc (CD) of the CDD 905, a magnetic disk of the magnetic disk drive 920, and other recording medium such as an optical disk, a mini disk (MD), a DVD (Digital Versatile Disc), etc. Further, the data and signals are online transmitted by the bus 912, signal lines, cables, and other transmission medium.

Further, "-- unit" or "-- means" explained in the present embodiment can be "-circuit", "-- device", or "-- equipment", and can be also "-- step", "-- stage", "-procedure", or "-- process". Namely, "-- unit" or "-- means" explained can be implemented by firmware stored in the ROM 913. Or it can be implemented by only software, hardware such as elements, devices, boards, wiring, a combination of software and hardware, or a combination with firmware. The firmware and software are stored in the recording medium such as a magnetic disk, a flexible disk, an optical disk, a compact disc, a mini disk, and a DVD, etc. as programs. The programs are read by the CPU 911 and executed by the CPU 911. That is, the programs allow the computer to function as "-- unit" or "-- means" described in the present embodiment. Or it allows the computer to execute procedures or methods explained as "-- unit" or "-- means" in the present embodiment.

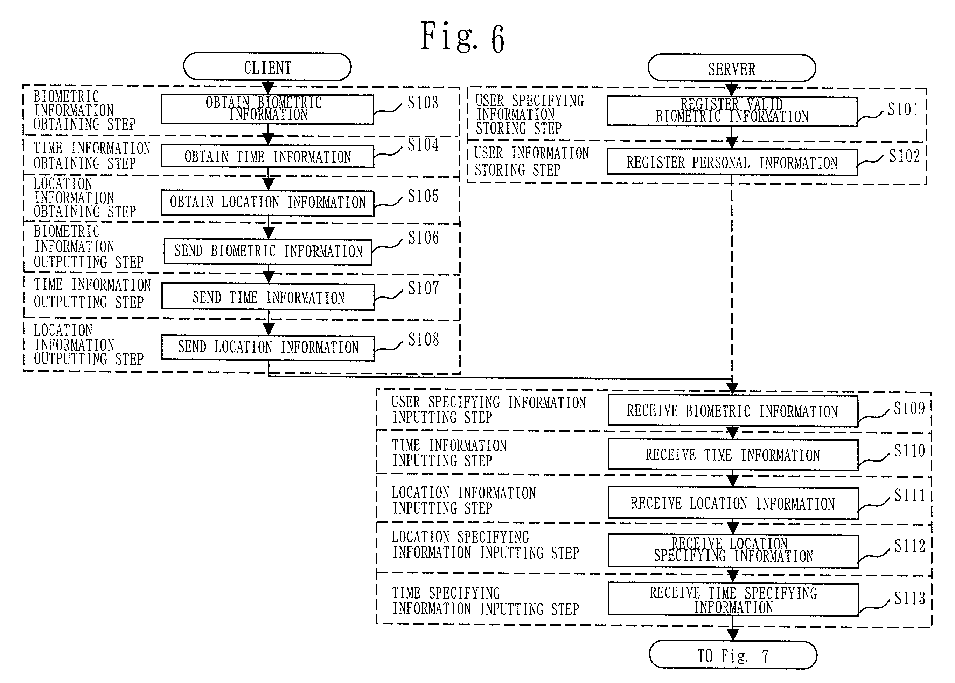

Fig. 6 is a flowchart showing an example of the operation of the terminal device 200 (client) and the authentication server device 300 (server).

In the authentication server device 300, the user specifying information storing unit 301 stores valid biometric information of a user in the memory device 351 (step S101: a user specifying information storing step). The user information storing unit 302 stores personal information of the user together with the identification information identifying the personal information in the memory device 351 (step S102: a user information storing step).

In the terminal device 200, the biometric information obtaining unit 201 obtains the biometric information of the user by the biometric authentication device 255 (step S103: a biometric information obtaining step). The time information obtaining unit 203 obtains time information from the GPS satellite 103 by the inputting device 253 (step S 104: a time information obtaining step). The location information obtaining unit 205 obtains location information from the GPS satellite 103 by the inputting device 253 (step S105: a location information obtaining step). The biometric information outputting unit 202 outputs by the outputting device 254 the biometric information obtained by the biometric information obtaining unit 201 to the authentication server device 300 (step S106: a biometric information outputting step). The time information outputting unit 204 outputs by the outputting device 254 the time information obtained by the time information obtaining unit 203 to the authentication server device 300 (step S107: a time information outputting step). The location information outputting unit 206 outputs by the outputting device 254 the location information obtained by the location information obtaining unit 205 to the authentication server device 300 (step S108: a location information outputting step).

In the authentication server device 300, the user specifying information inputting unit 303 inputs by the inputting device 353 the biometric information of the user from the terminal device 200 (step S109: a user specifying information inputting step). The time information inputting unit 305 inputs by the inputting device 353 the time information from the terminal device 200 (step S110: a time information inputting step). The location information inputting unit 307 inputs by the inputting device 353 the location information from the terminal device 200 (step S111: a location information inputting step). The location specifying information inputting unit 308 inputs by the inputting device 353 the location specifying information from the terminal device 200 (step S112: a location specifying information inputting step). The time specifying information inputting unit 306 inputs by the inputting device 353 the time specifying information from the web server 105 (step S 113: a time specifying information inputting step).

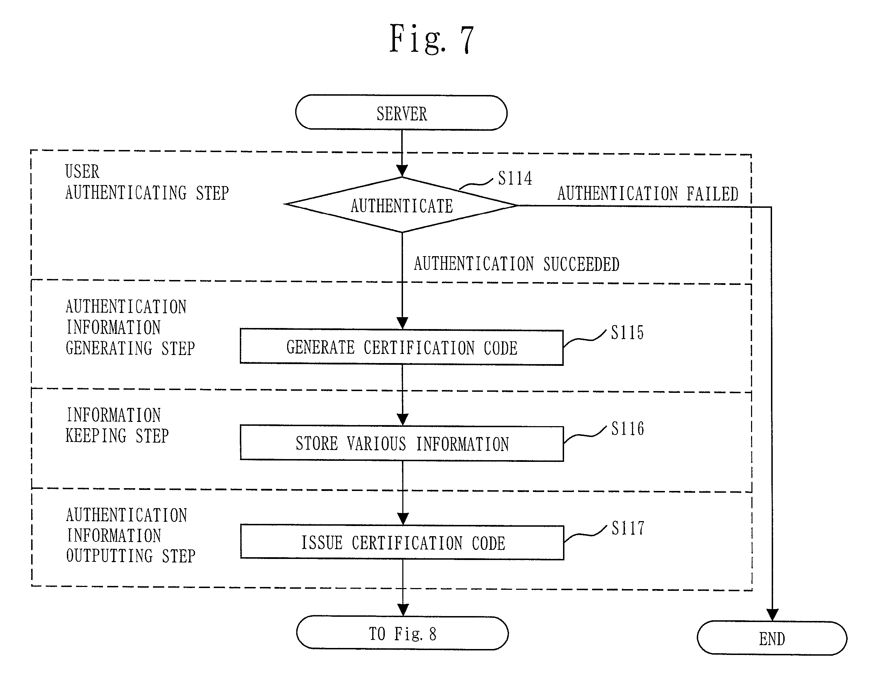

Fig. 7 is a flowchart showing an example of the operation of the authentication server device 300 (server).

The user authenticating unit 304 authenticates by the processing device 352 the user by comparing the biometric information inputted by the user specifying information inputting unit 303 with the user specifying information stored by the user specifying information storing unit 301 (step S114: a user authenticating step). If the authentication of the user by the user authenticating unit 304 succeeds, the authentication information generating unit 309 synthesizes by the processing device 352 the identification information stored by the user information storing unit 302, the time information inputted by the time information inputting unit 305, the time specifying information inputted by the time specifying information inputting unit 306, the location information inputted by the location information inputting unit 307, and the location specifying information inputted by the location specifying information inputting unit 308 to generate a certification code 104 (step S 115: an authentication information generating step). The information keeping unit 310 stores the identification information, the time information, the time specifying information, the location information, and the location specifying information synthesized by the authentication information generating unit 309 in the memory device 351 using the certification code 104 as a key (step S116: an information keeping step). Here the information keeping unit 310 does not need to store all the information in the memory device 351. For example, the information keeping unit 310 can store only the identification information, the time information, the time specifying information, and the location information in the memory device 351. The authentication information outputting unit 311 outputs by the outputting device 354 the certification code 104 generated by the authentication information generating unit 309 to the terminal device 200 (step S 117: an authentication information outputting step).

After the operation of the authentication server device 300 shown in Fig. 7, the terminal device 200 receives the certification code 104 outputted by the authentication information outputting unit 311 of the authentication server device 300. As described above, for example, the terminal device 200 prints the certification code 104 received on a label. The user 102 inputs the certification code 104 printed on the label to the verification device 400. The verification device 400 sends the certification code 104 inputted to the authentication server device 300.

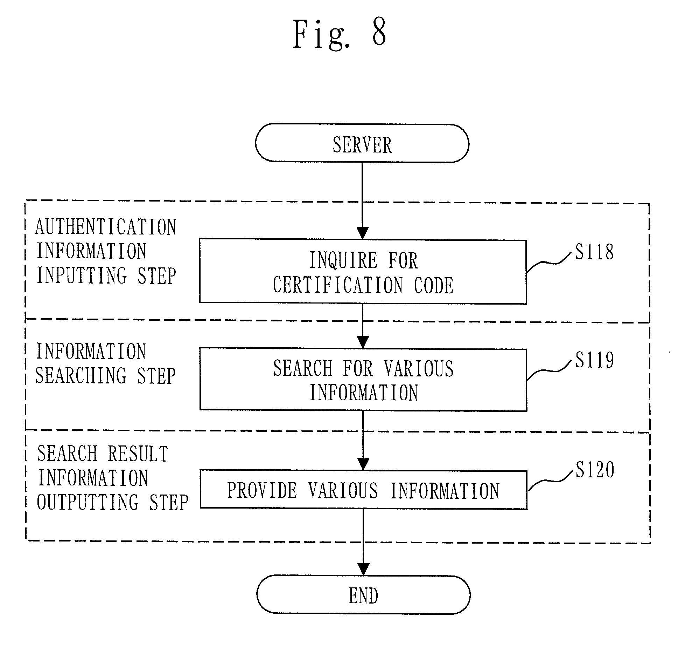

Fig. 8 is a flowchart showing an example of the operation of the authentication server device 300 (server).

In the authentication server device 300, the authentication information inputting unit 312 inputs by the inputting device 353 the certification code 104 from the verification device 400 (step S118: an authentication information inputting step). The information searching unit 313 searches the memory device 351 using the certification code 104 inputted by the authentication information inputting unit 312 as a key and retrieves the identification information, the time information, the time specifying information, the location information, and the location specifying information from the memory device 351 as search result information (step S 119: an information searching step). Here, the information searching unit 313 does not need to retrieve all the information as the search result information. For example, the information searching unit 313 can retrieve only the identification information, the time information, the time specifying information, and the location information as the search result information. The search result information outputting unit 314 outputs by the outputting device 354 the search result information retrieved by the information searching unit 313 to the verification device 400 (step S120: a search result information outputting step).

After the operation of the authentication server device 300 shown in Fig. 8, the verification device 400 receives the search result information outputted by the search result information outputting unit 314 of the authentication server device 300. As described above, the verification device 400 displays the search result information received on a screen. Further, in the above example, since the search result information includes the identification information, the verification device 400 searches the memory device 351 (for example, a database of other system) using the identification information as a key. Then, the personal information of the user stored by the user information storing unit 302 of the authentication server device 300 (or other system) is retrieved. The personal information retrieved of the user is displayed by the verification device 400 on the screen. The user 102 can confirm "when, where, and by whom" the label has been issued by this.

### Embodiment 2.

The present embodiment, mainly a difference with the first embodiment, will be explained.

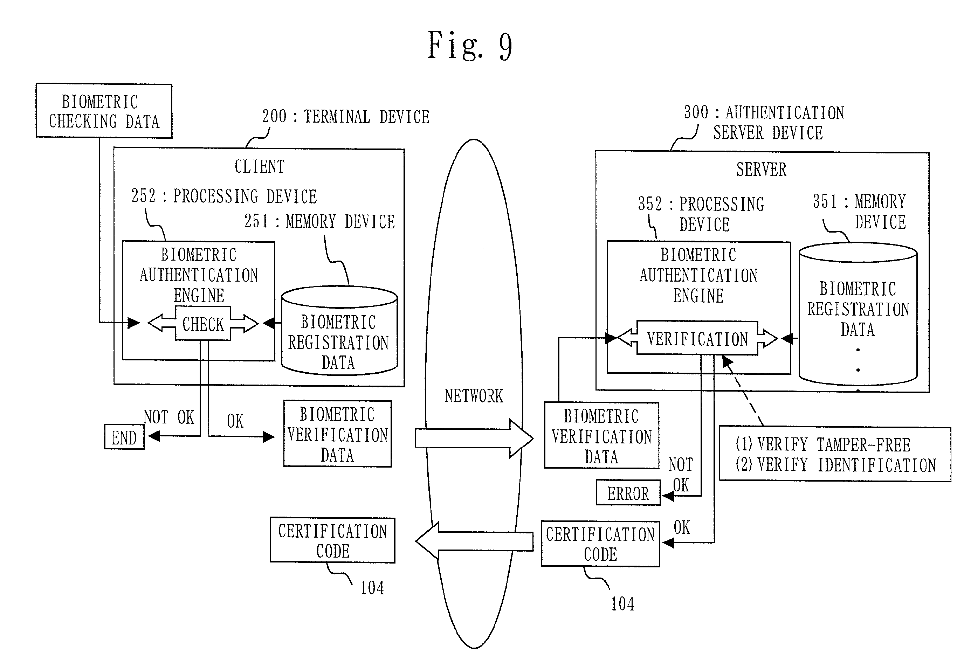

As shown in Fig. 9, in the present embodiment, the terminal device 200 (client) includes a database (an example of the memory device 251) which maintains registration information identical to or different from the one of the authentication server device 300 (server). Further, the client itself carries out the authentication process of the user by a biometric authentication engine (an example of the processing device 252). Before the server carries out the authentication process, the client does the authentication process between the biometric information (biometric authentication checking data) measured by the client and the biometric information (biometric authentication registration data) registered on the client, and only if the processed result shows that the user is identified, the biometric information data (biometric authentication verification data) obtained by the client is sent to the server. The server carries out the authentication process by a biometric authentication engine (an example of the processing device 352) using the data sent via the network. As discussed, in this embodiment, the client once carries out the authentication process and only if the user is identified, the authentication request is sent to the server, which eliminates necessity of requesting the server for the authentication process by the client again even if the authentication process by the server fails. Therefore, the communicating time and the processing time between the client and the server can be reduced.

Further, in the present embodiment, when the server carries out the authentication process, the client first sends the server a request for the authentication. After receiving the authentication request from the client, the server generates a transmission format of data used for sending the data from the client to the server. The client encodes the biometric information obtained by the client based on the transmission format received and sends it to the server. The transmission format sent from the server to the client is made different for each request for the authentication process from the client. As discussed above, in the present embodiment, the client does not first send the biometric information at the time of authentication, but the client first sends the server the request for the authentication process. Then, the server which has received the request for the authentication process sends a transmission format that is different for each request to the client. Therefore, since the client encodes the biometric information measured and sends it based on the transmission format that is different for each request, it is possible to prevent impersonation even if the data for transmission is stolen.

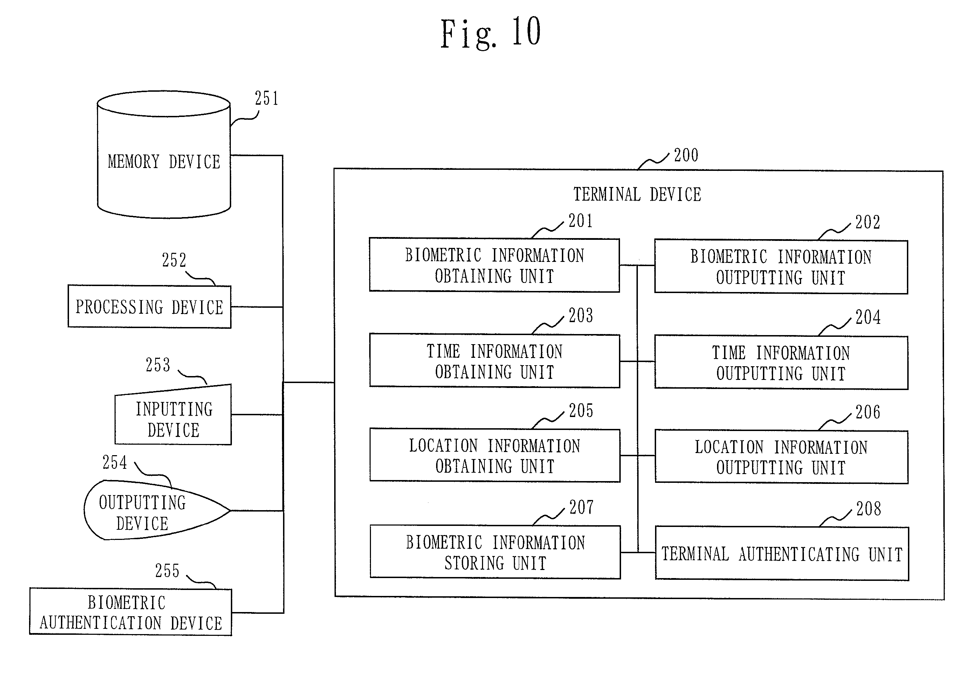

Fig. 10 is a block diagram showing a configuration of the terminal device 200 according to the present embodiment.

In the present embodiment, in addition to the same configuration as the first embodiment, the terminal device 200 includes a biometric information storing unit 207 and a terminal authenticating unit 208.

The biometric information storing unit 207 stores valid biometric information of a user in the memory device 251. The biometric information storing unit 207 can store biometric information of multiple users. For example, the biometric information storing unit 207 registers in the database the same image data as image data of a face of the user himself/herself to be stored by the user specifying information storing unit 301 of the authentication server device 300 (feature quantity of the face can be registered instead of the image data of the face, as discussed later). The biometric information storing unit 207 can register in the database image data different from the image data of the face of the user to be stored by the user specifying information storing unit 301 of the authentication server device 300. Here, the latter image data is also image data of the face of the user himself/herself. The terminal authenticating unit 208 authenticates the user by the processing device 252 based on the biometric information obtained by the biometric information obtaining unit 201. For example, the terminal authenticating unit 208 authenticates by the processing device 252 the user by comparing the biometric information obtained by the biometric information obtaining unit 201 with the biometric information stored by the biometric information storing unit 207. When the user is authenticated by the terminal authenticating unit 208, the biometric information outputting unit 202 outputs the biometric information obtained by the biometric information obtaining unit 201 to the authentication server device 300. In this embodiment, the authentication server device 300 outputs format information specifying the format for outputting the biometric information by the biometric information outputting unit 202. Therefore, the biometric information outputting unit 202 converts the biometric information obtained by the biometric information obtaining unit 201 to the format specified by the format information outputted by the authentication server device 300 and outputs it.

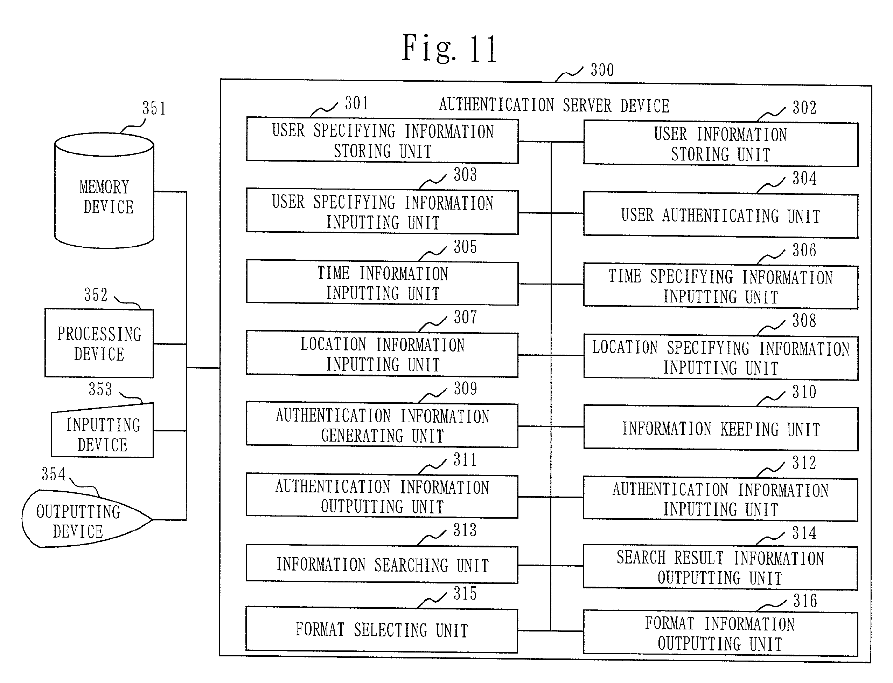

Fig. 11 is a block diagram showing a configuration of the authentication server device 300 according to the present embodiment.

In the present embodiment, in addition to the same configuration as the one of the first embodiment, the authentication server device 300 includes a format selecting unit 315 and a format information outputting unit 316.

The user specifying information inputting unit 303 obtains the biometric information from the terminal device 200 as user specifying information and inputs it by the inputting device 353. The format selecting unit 315 selects by the processing device 352 a format of the biometric information to be outputted from the terminal device 200. The format information outputting unit 316 outputs by the outputting device 354 the format information specifying the format selected by the format selecting unit 315. For example, the format information outputting unit 316 sends the format information to the terminal device 200 via the network. The user authenticating unit 304 converts the biometric information inputted by the user specifying information inputting unit 303 from the format selected by the format selecting unit 315 to an original format by the processing device 352 and authenticates the user based on the converted biometric information. For example, the user authenticating unit 304 authenticates the user by comparing the biometric information of which the format is converted to the original format and the valid biometric information of the user stored by the user specifying information storing unit 301. The user authenticating unit 304 can notify the terminal device 200 of the authentication result (whether the authentication of the user has succeeded or failed).

In the following, an example of carrying out biometric authentication between the terminal device 200 and the authentication server device 300 will be explained, in which image data of a face is used as the biometric information.

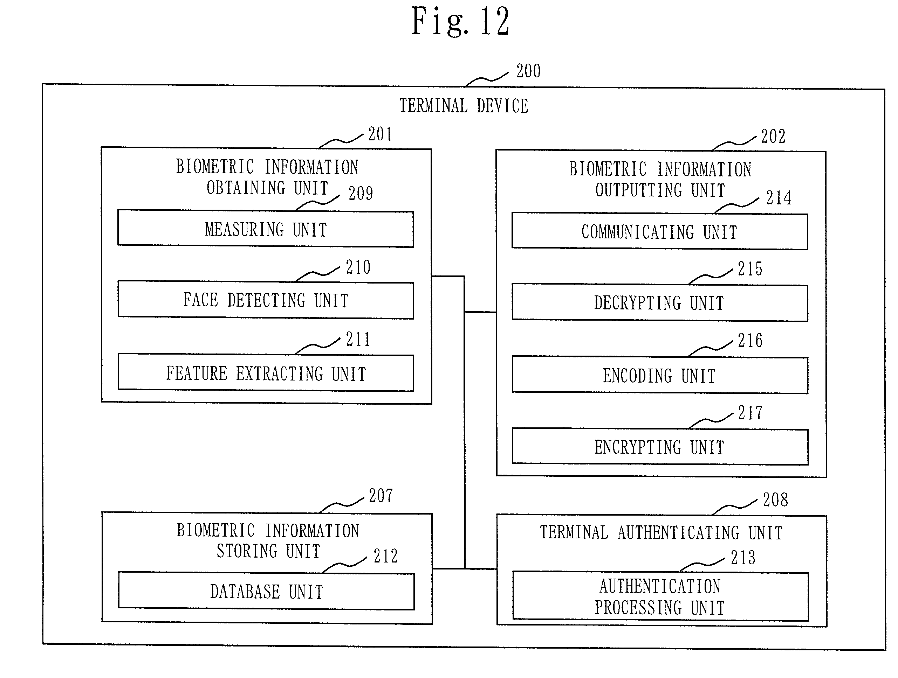

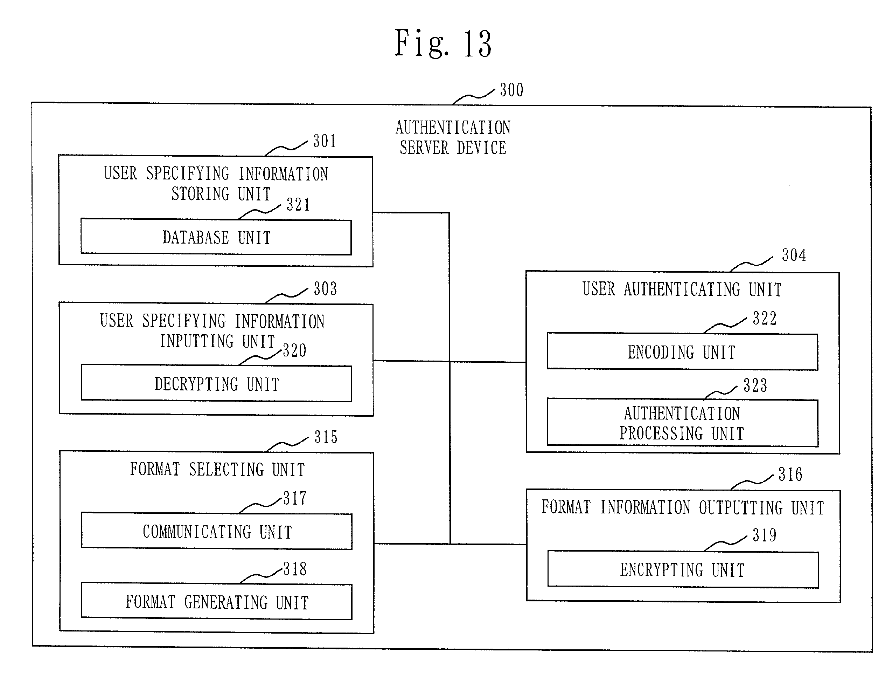

In this example, the terminal device 200 includes functional units as shown in Fig. 12 in addition to the configuration shown in Fig. 10. Further, the authentication server device 300 further includes functional units shown in Fig. 13 in addition to the configuration shown in Fig. 11. Figs. 12 and 13 omit a part of configuration elements shown in Figs. 10 and 11, to simplify the drawings.

As shown in Fig. 12, in the terminal device 200 (client), the biometric information obtaining unit 201 includes a measuring unit 209, a face detecting unit 210, and a feature extracting unit 211. The biometric information storing unit 207 includes a database unit 212. The terminal authenticating unit 208 includes an authentication processing unit 213. The biometric information outputting unit 202 includes a communicating unit 214, a decoding unit 215, an encoding unit 216, and an encrypting unit 217. Further, as shown in Fig. 13, in the authentication server device 300 (server), the format selecting unit 315 includes a communicating unit 317 and a format generating unit 318. The format information outputting unit 316 includes an encrypting unit 319. The user specifying information inputting unit 303 includes a decrypting unit 320. The user specifying information storing unit 301 includes a database unit 321. The user authenticating unit 304 includes an encoding unit 322 and an authentication processing unit 323.

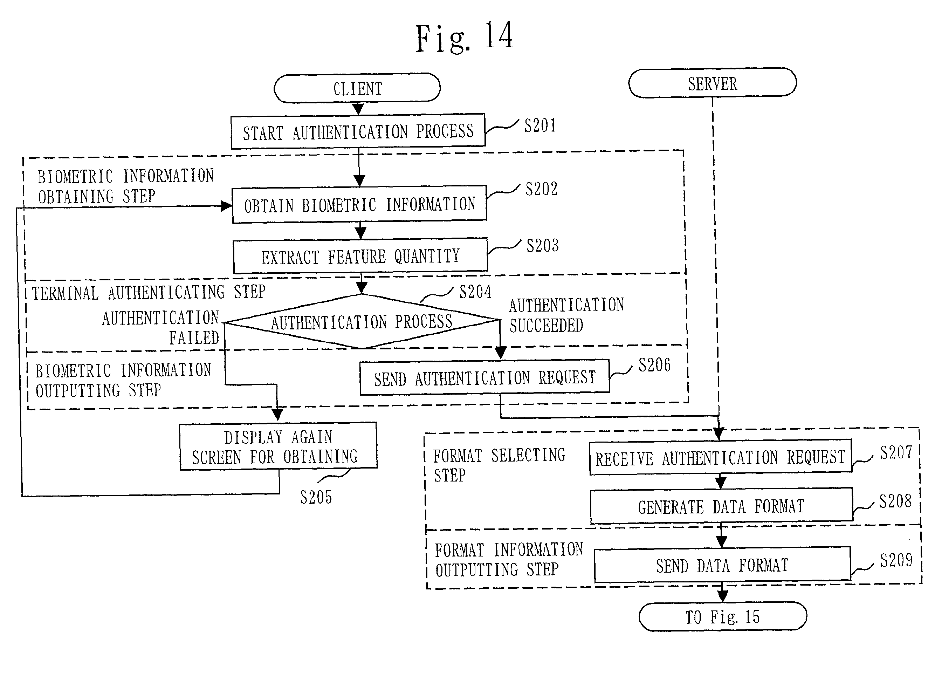

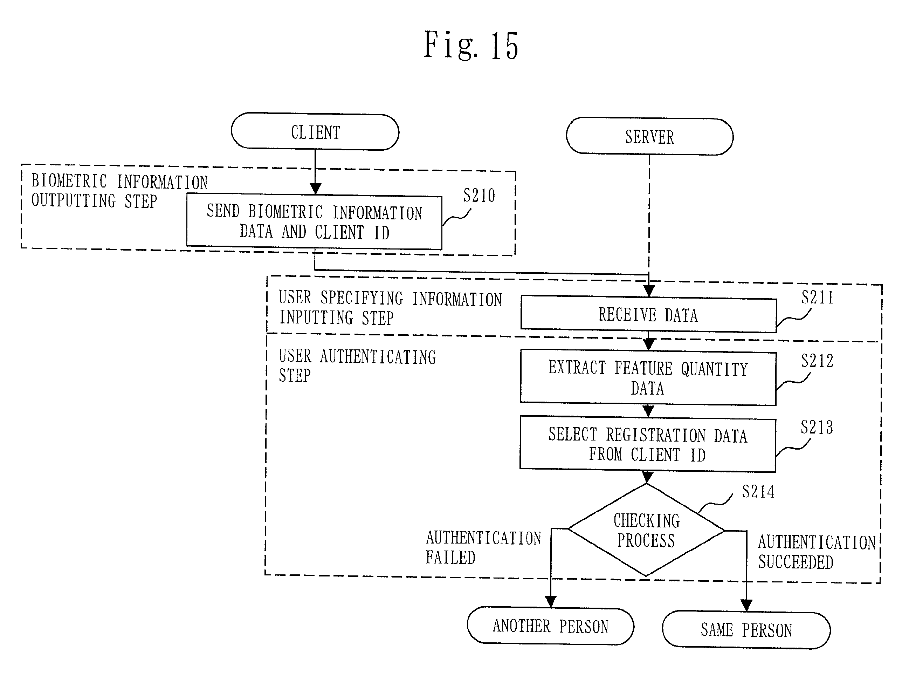

Figs. 14 and 15 show flowcharts of authentication process according to this example. Also in the present embodiment, as well as the first embodiment, the client and the server performs the operation shown in Figs. 6 through 8; however, Figs. 14 and 15 show only operation related to the authentication process.

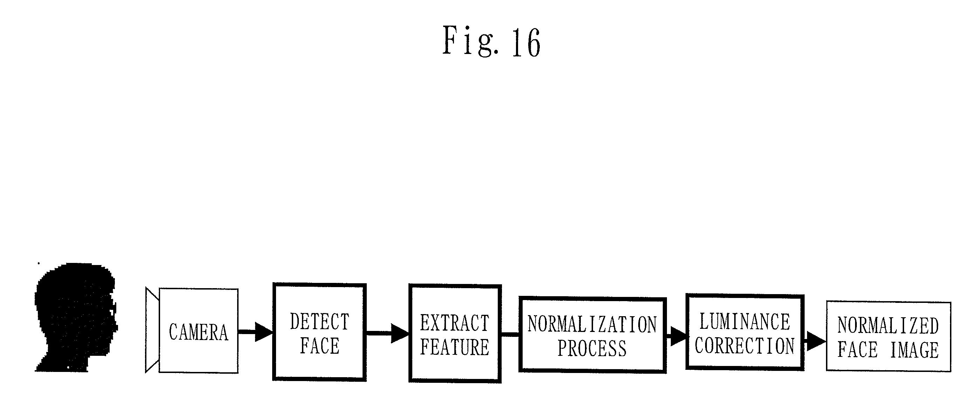

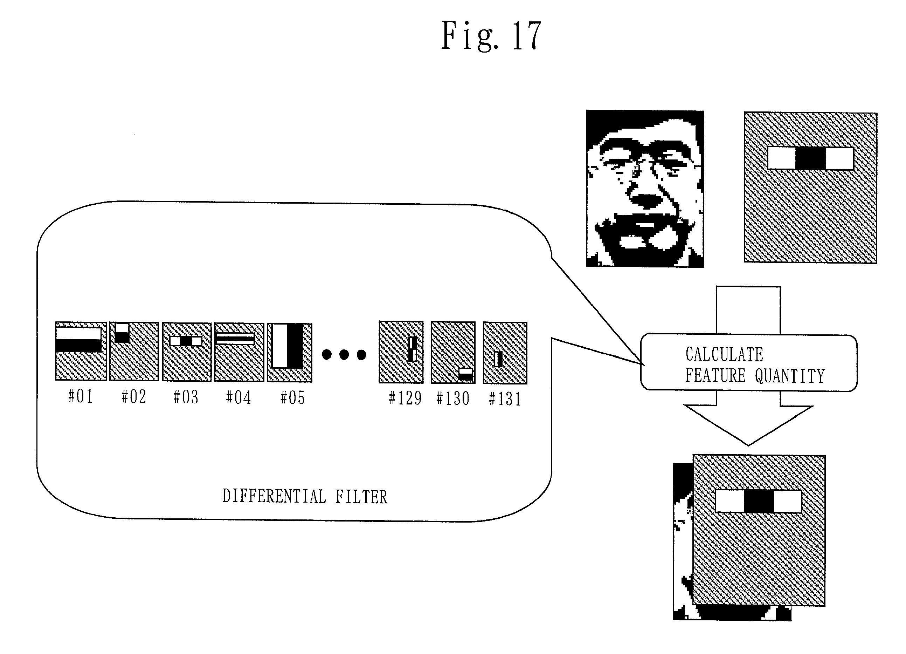

In the client, when the authentication process starts (step S201), the measuring unit 209 takes a face image of the user using a camera (step S202). At this time, as shown in Fig. 16, the face detecting unit 210 first detects a face from the face image taken. Then, the feature extracting unit 211 extracts positions of feature points such as eyes, a nose, and a mouth (step S203). At this time, as shown in Fig. 16, the feature extracting unit 211 generates a face image normalized to a certain size (for example, a size of 40x40 pixels) using the position information (normalization and correction of brightness are done). For the face detection, a method disclosed in Viola, P.; Jones, M., "Rapid Object Detection Using a Boosted Cascade of Simple Features," IEEE Computer Society Conference on Computer Vision and Pattern Recognition (CVPR), ISSN: 1063-6919, Vol.1, pp.511-518, December 2001 can be used, for example. By similar method, it is also possible to detect eyes, a nose, and a mouth, respectively. The feature extracting unit 211 retrieves feature quantity from the face image taken after obtaining the face image normalized. Various methods can be used for extracting the feature quantity, and for example, it is possible to calculate the feature quantity using a differential filter shown in Fig. 17. Using this differential filter, the feature quantity is calculated by subtracting a sum of pixel values within a black color area from a sum of pixel values within a white color area. Steps S202 and S203 correspond to the biometric information obtaining step shown in Fig. 6 of the first embodiment.

The biometric information storing unit 207 stores the valid biometric information of the user beforehand in the memory device 251, not illustrated (a biometric information storing step). In this example, the database unit 212 stores data of the feature quantity retrieved from the face image of the user beforehand as the registration data of the user.

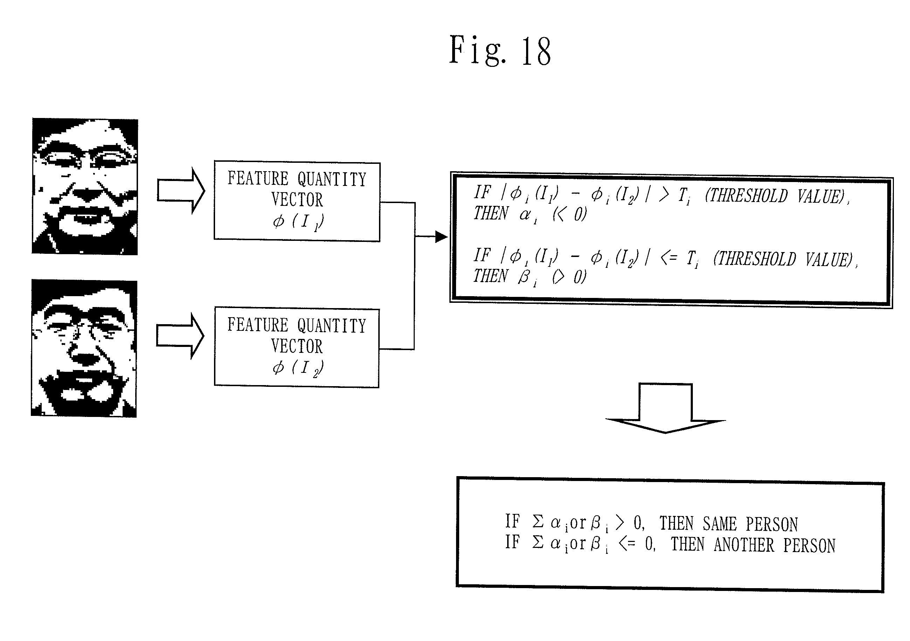

The terminal authenticating unit 208 authenticates by the processing device 252 the user by comparing the biometric information obtained by the biometric information obtaining unit 201 with the biometric information stored by the biometric information storing unit 207 (a terminal authenticating step). In this example, the authentication processing unit 213 carries out the authentication process between the registration data stored in the database unit 212 and the feature quantity data measured by the feature extracting unit 211 (step S204). As the authentication process, as shown in Fig. 18, for example, a difference of each value of feature quantity vectors is processed by a threshold value to obtain values αᵢ and βᵢ. Then, assuming that there are N pieces of feature quantity, an authentication score S = Σᵢ₌₁^{N} αᵢ or βᵢ is obtained by adding these values. The authentication processing unit 213 compares the authentication score S with the threshold value T, and outputs the result "the authentication failed" if S<T, and if S>=T, the result "the authentication succeeded", which means the user is identified to be the same person.

If the authentication by the authentication processing unit 213 fails, the client displays a screen for obtaining measurement again to obtain the biometric information again (step S205). On the other hand, if the authentication by the authentication processing unit 213 succeeds, the communicating unit 214 of the client sends the authentication request to the server (step S206).

In the server, the format selecting unit 315 selects by the processing device 352 a format of the biometric information to be outputted by the client (a format selecting step). In this example, after the communicating unit 317 receives the authentication request from the client (step S207), the format generating unit 318 generates a data format of the biometric information which the client sends to the server (step S208).

The format information outputting unit 316 outputs by the outputting device 354 format information specifying the format selected by the format selecting unit 315 to the client (a format information outputting step). In this example, the encrypting unit 319 encrypts and sends the format information (step S209).

In the client, the biometric information outputting unit 202 converts by the processing device 252 the biometric information obtained by the biometric information obtaining unit 201 to the format shown by the format information outputted from the authentication server device 300 and outputs it (a biometric information outputting step). In this example, the decoding unit 215 decrypts the data (format information) sent from the server to retrieve the data format. The encoding unit 216 generates biometric information data from the feature quantity data based on the data format. For example, if a total of N pieces of 1 to N feature quantity data is obtained, an order of alignment can be used as the data format. Namely, if "feature quantity 1, 2, 3, ..., N" are obtained as the feature quantity data, its order of alignment can be defined as "feature quantity N, feature quantity 2, feature quantity 5, feature quantity 1", for example. After encrypting a client ID as ID information identifying the client himself/herself as well as the biometric information data, the encrypting unit 217 sends the encrypted biometric information data and client ID to the server (step S210). The client ID can be a production number of equipment to which the client is installed, for example.

In the server, the decrypting unit 320 decrypts the data sent from the client (step S211) and retrieves the biometric information data and the client ID (step S212). Step S212 corresponds to the user specifying information inputting step shown in Fig. 6 of the first embodiment.

The user authenticating unit 304 converts by the processing device 352 the biometric information inputted by the user specifying information inputting unit 303 from the format selected by the format selecting unit 315 to the original format and authenticates the user based on the converted biometric information (a user authenticating step). In this example, the database unit 321 retrieves registration data which is made correspondent with the client ID retrieved by the decrypting unit 320 (step S212). The feature quantity data previously retrieved from the face image of the user of the corresponding client can be used as the registration data which is made correspondent with the client ID. The encoding unit 322 retrieves the feature quantity data by converting the biometric information data inversely from the data format which is sent to the client (step S213). For example, if the biometric information data sent by the client is based on the data format of "feature quantity N, feature quantity 2, feature quantity 5, ..., feature quantity 1," it is possible to retrieve each feature quantity data "feature quantity 1, 2, 3, ... , N" by returning the order of alignment to the original. The authentication processing unit 323 carries out the authentication process (checking process) using the feature quantity data from the client retrieved by the encoding unit 322 and the feature quantity data of the registration data on the server (step S214). This authentication process is the same authentication process carried out at the client side. For example, as shown in Fig. 18, the authentication result can be obtained by processing a total sum of α and β, which are obtained by processing difference of each feature quantity with threshold value, as the authentication score with threshold value. The authentication processing unit 323 returns to the client the result of "authentication failed" (showing another person instead of the user himself/herself) if the authentication score is smaller than the threshold value, and "authentication succeeded" (showing the same person as the user) if the authentication score is greater than the threshold value. If the authentication succeeds at step S214, the server performs the operation after the authentication information generating step shown in Fig. 7 of the first embodiment.

As discussed above, the personal identification device (the authentication system 100) explained in the embodiment is characterized in that the client (the terminal device 200) includes the database unit 212 (the biometric information storing unit 207) maintaining the registration information (valid biometric information) identical to or different from the one of the server (the authentication server device 300), the client itself includes the authentication processing unit 213 (the terminal authenticating unit 208), before the server carries out the authentication process, the authentication process is done between the biometric information measured on the client and the biometric information registered on the client, and only if the processed result showing that the user is identified as the same person is obtained, the biometric information data obtained by the client is sent to the server, and the server carries out the authentication process. As discussed, in the present embodiment, the client once carries out the authentication process. Then, only if the user is judged to be the same person, the client outputs the authentication request to the server. This eliminates necessity to output another request for the authentication process again from the client to the server when the authentication process fails at the server. Therefore, the communicating time and the processing time can be reduced between the client and the server.

Further, the personal identification device is characterized in that the client includes the encoding unit 216 (the biometric information outputting unit 202) and the server includes the format generating unit 318 (the format selecting unit 315) and the encoding unit 322 (the user authenticating unit 304), and when the server carries out the authentication process, the client first outputs the authentication request to the server, after the server receives the authentication request from the client, the format generating unit 318 generates the transmission format for sending the data from the client to the server and sends the format information to the client, and the client encodes by the encoding unit 216 the biometric information obtained by the client based on the received transmission format and sends it to the server. Further, at this time, it is **characterized in that** the transmission format for sending data to the client from the server is made different for each authentication request from the client. As discussed, in the present embodiment, the client does not first send the biometric information data in case of the authentication, but the client first sends the request for the authentication process to the server. Then, the server which has received the request for the authentication process sends the transmission format of the biometric information being different for each request to the client. The client encodes the biometric information measured based on the transmission format and sends it. By this, it is possible to prevent impersonation even if the data to be transmitted is stolen.

### Embodiment 3.

The present embodiment, mainly a difference with the second embodiment, will be explained.

In this embodiment, in the terminal device 200 (client), the measuring unit 209 takes multiple face images using a camera. The feature extracting unit 211 retrieves feature quantity from these multiple face images. Then, the authentication processing unit 213 carries out the authentication process between the feature quantity retrieved by the feature extracting unit 211 and the feature quantity of the registration data in the memory device 251 (database), and the feature quantity having the highest authentication score is sent to the authentication server device 300 (server).

In the present embodiment, the terminal device 200 has the same configuration as the one of the second embodiment. In this configuration, the biometric information obtaining unit 201 obtains the biometric information of the user at least two times. Every time the biometric information obtaining unit 201 obtains the biometric information of the user, the terminal authenticating unit 208 generates authentication rate information (the above authentication score, for example) by the processing device 252 by quantifying a rate of matching between the biometric information obtained by the biometric information obtaining unit 201 and the biometric information stored by the biometric information storing unit 207. The biometric information outputting unit 202 selects by the processing device 252 the biometric information obtained by the biometric information obtaining unit 201 based on the authentication rate information calculated by the terminal authenticating unit 208 and outputs it (for example, the image data which maximizes the authentication score is selected).

As discussed above, the personal identification device (the authentication system 100) explained in the present embodiment is characterized in that the client (the terminal device 200) measures plural pieces of biometric information, carries out the authentication process with the biometric information and the registered image which the client holds, and sends feature quantity vector of an image having the highest authentication rate as the biometric information data to the server (the authentication server device 300). In this way, in the present embodiment, by sending the biometric information data suitable to the authentication to the server, possibility of authentication failure of the server is decreased, which enables to reduce the communicating time and processing time between the client and the server.

### Embodiment 4.

The present embodiment, mainly a difference with the second embodiment, will be explained.

In the present embodiment, after receiving the data format information from the authentication server device 300 (server), the terminal device 200 (client) sends less amount of the feature quantity thinned from the obtained feature quantity.

In this embodiment, the terminal device 200 has the same configuration as one of the second embodiment. In this configuration, the biometric information outputting unit 202 thins out and outputs the biometric information obtained by the biometric information obtaining unit 201.

As discussed above, the personal identification device (the authentication system 100) explained in this embodiment is characterized in that the biometric information data obtained from measured data which is measured at a decreased sampling rate than a case in which the client (the terminal device 200) itself does the authentication is sent to the server (the authentication server device 300). The server has to output the final verification result; however, since the authentication result showing the user is the same person has been once obtained at the client, the client sends the biometric information data of which the sampling rate is lower than the biometric information data used for the authentication on the client to the server side to request for the authentication. This enables to reduce the data transmission amount from the client to the server.

### Embodiment 5.

The present embodiment, mainly a difference with the second embodiment, will be explained.

According to the present embodiment, in the process for generating the format of the data which the authentication server device 300 (server) sends to the same terminal device 200 (client) (step S208 in Fig. 14), a data format that increases the difference when the biometric information data having small degree of similarity with the biometric information data of the data format specified previously is sent is specified.

In the present embodiment, the authentication server device 300 has the same configuration as the one of the second embodiment. In this configuration, when selecting a format for the biometric information to be outputted by the biometric information outputting unit 202 of the same terminal device 200 again, the format selecting unit 315 selects a format corresponding to a matrix obtained by rotating a matrix corresponding to the format previously selected by 90 degrees on a vector space.

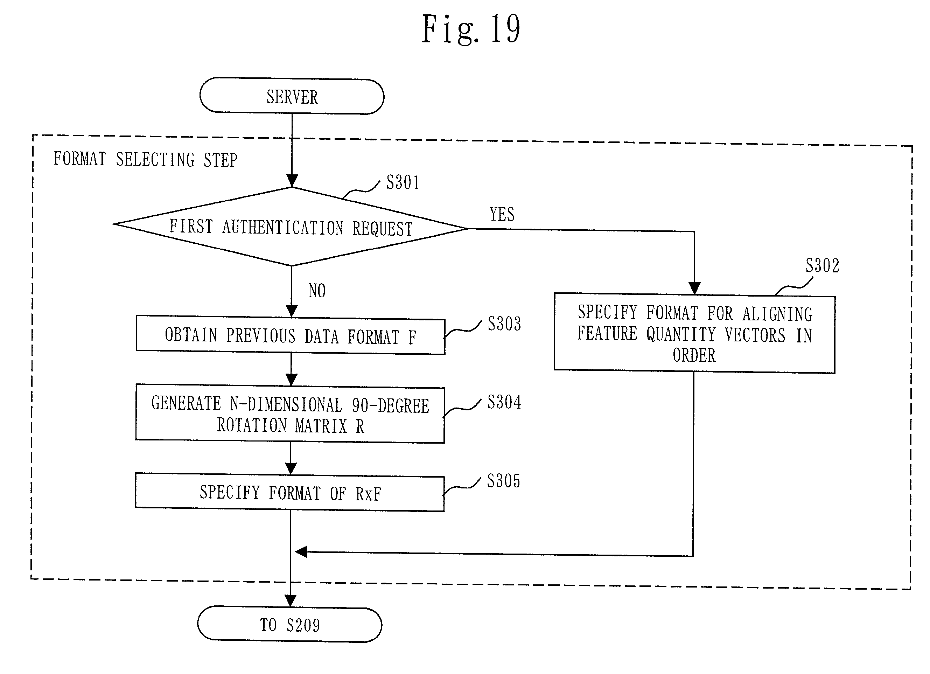

Fig. 19 is a flowchart of data format generating process according to the present embodiment.

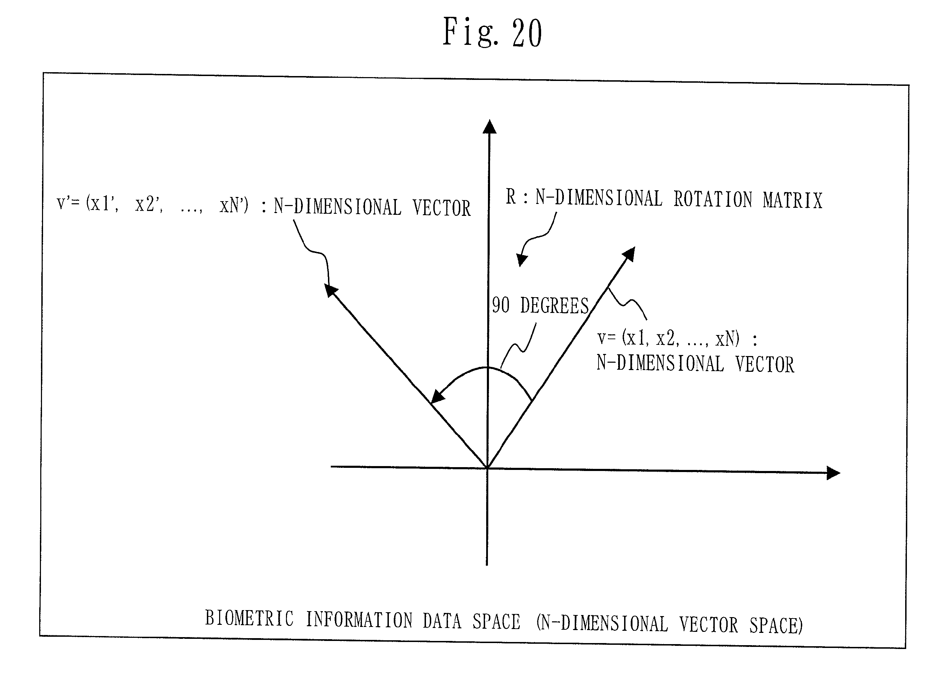

For example, it is assumed that in the server, N pieces of feature quantity data x1, x2, ..., xN are obtained by the measuring unit 209. When the communicating unit 317 receives the first authentication request from the client (step S301), the format generating unit 318 specifies a data format for sending N-dimensional vector v = (x1, x2, ..., xN) which is obtained by simply aligning the feature quantity data as the biometric information data (step S302). If the authentication request received by the communicating unit 317 is not the first authentication request (step S301), the format generating unit 318 obtains, using a specified matrix F of the previous data format (step S303), a 90-degree rotation matrix R in N-dimensional biometric information data space as shown in Fig. 20 (step S304). Then, the format generating unit 318 specifies RxF as a new data format to the client (step S 305).

As discussed above, the personal identification device (the authentication system 100) explained in the present embodiment is characterized in that when specifying the data format to the same client (the terminal device 200), the server (the authentication server device 300) specifies the data format by newly operating the 90-degree rotation matrix in the vector space generated by the data format specified at the previous time. Generally, impersonation is done by repeating slightly changing transmission data. According to the present embodiment, in response to repeated authentication requests from the same client, the biometric information data of the data format, which is orthogonal to the biometric information vector specified at the previous time, is specified. Because of this, when the biometric information data having a small differential vector with the one of the previous time is sent, the differential vector becomes a large vector with the data format of this time, which enables to prevent an attack by impersonation.

### Embodiment 6.

The present embodiment, mainly a difference with the second embodiment, will be explained.

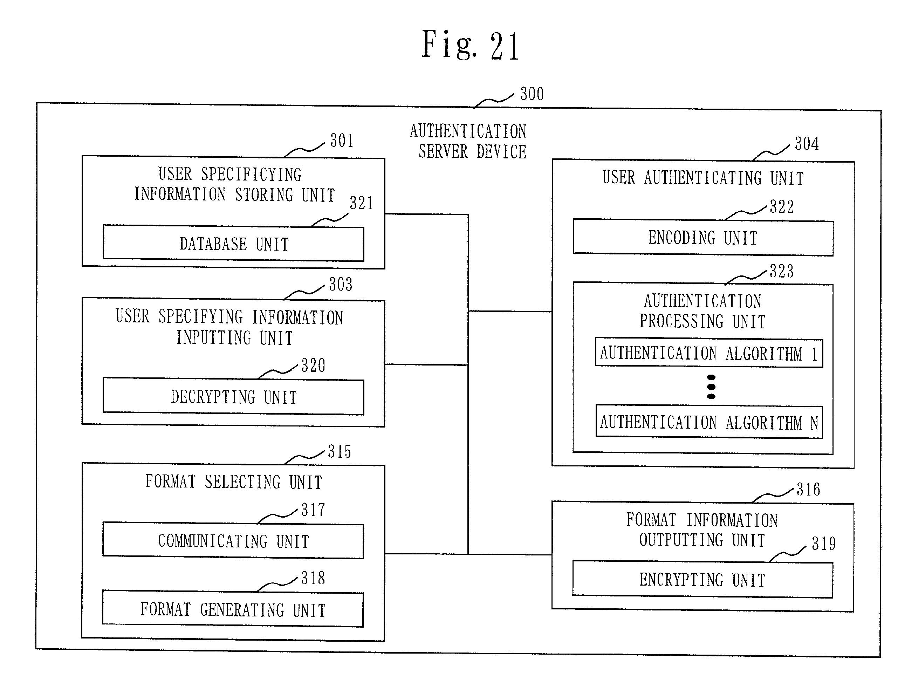

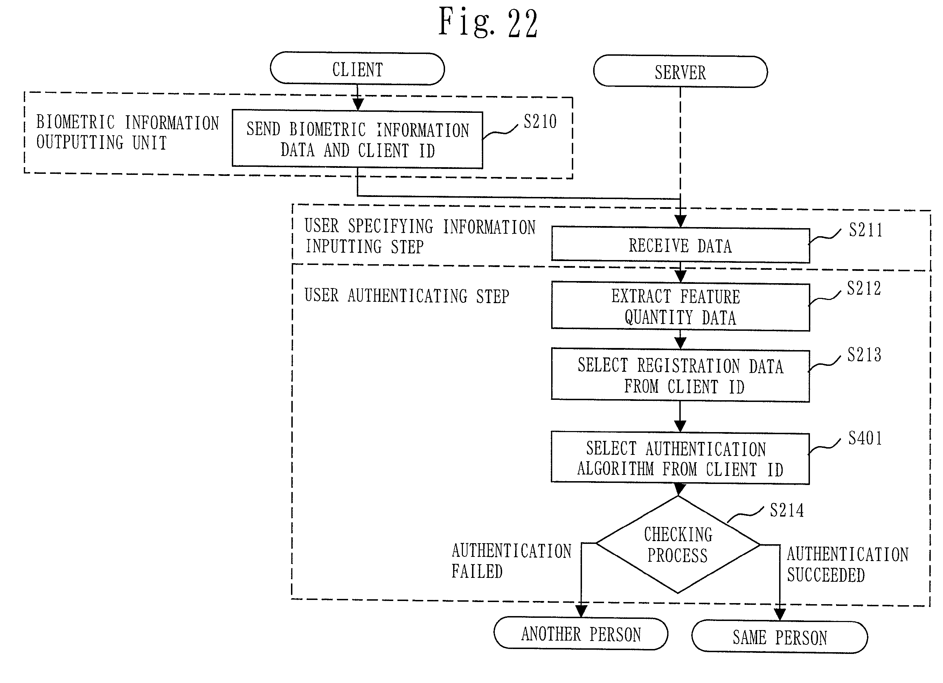

In this embodiment, it is assumed that there are N clients (client 1, .., client N) having different biometric authentication devices 255 (measuring devices) as the terminal devices 200 (client). The authentication processing unit 323 of the authentication server device 300 (server) has multiple authentication algorithms (authentication algorithm 1, ..., authentication algorithm N) corresponding to respective clients as shown in Fig. 21, and different authentication algorithms are used for respective clients. As shown in the flowchart of Fig. 22, in the server, after the step S213 shown in Fig. 15, the authentication processing unit 323 selects the authentication algorithm based on the client ID in response to the authentication request from the client (step S401). Then, the authentication process (checking process) is done using the selected algorithm (step S214 shown in Fig. 15).

According to the present embodiment, the authentication server device 300 has the same configuration as the one of the second embodiment. In this configuration, the user specifying information inputting unit 303 obtains biometric information from each terminal device 200 of multiple terminal devices 200. The biometric information differs from one terminal device 200 to another in at least one of accuracy and type.

As discussed above, the personal identification device (the authentication system 100) explained in the present embodiment is characterized in that the server (the authentication server device 300) has multiple authentication algorithms and uses the most suitable authentication algorithm according to the client (the terminal device 200). When the clients have different measuring devices (for example, cameras having different resolutions or focal distances), characteristic of the image data obtained varies from client to client. The feature quantity data obtained as the biometric information has different property every time, and this variety tends to depend on this characteristic of the image data. Because of this, if the same authentication algorithm is used for all clients, a high authentication rate can be obtained when the feature quantity data of a certain client is used; however a low authentication rate may be obtained when the feature quantity data of another client is used. On the contrary, according to the present embodiment, by selecting the most suitable authentication algorithm for each client, it is possible to obtain a high authentication rate for the feature quantity data sent from all the clients.

### Brief Explanation of the Drawings

[Fig. 1] Fig. 1 shows a configuration of an authentication system according to first through sixth embodiments.
[Fig. 2] Fig. 2 is a block diagram showing a configuration of a terminal device according to the first through sixth embodiments.
[Fig. 3] Fig. 3 is a block diagram showing a configuration of an authentication device according to the first through sixth embodiments.
[Fig. 4] Fig. 4 shows an example of an external appearance of the terminal device and the authentication device according to the first through sixth embodiments.
[Fig. 5] Fig. 5 shows an example of hardware resource of the terminal device and the authentication device according to the first through sixth embodiments.
[Fig. 6] Fig. 6 is a flowchart showing operation of the terminal device and the authentication device according to the first through sixth embodiments.
[Fig. 7] Fig. 7 is a flowchart showing operation of the authentication device according to the first through sixth embodiments.
[Fig. 8] Fig. 8 is a flowchart showing operation of the authentication device according to the first through sixth embodiments.
[Fig. 9] Fig. 9 shows a configuration of an authentication system according to second through sixth embodiments.
[Fig. 10] Fig. 10 is a block diagram showing a configuration of a terminal device according to the second through sixth embodiments.
[Fig. 11] Fig. 11 is a block diagram showing a configuration of an authentication device according to the second through sixth embodiments.
[Fig. 12] Fig. 12 is a block diagram showing the configuration of the terminal device according to the second through sixth embodiments.
[Fig. 13] Fig. 13 is a block diagram showing the configuration of the authentication device according to the second through sixth embodiments.
[Fig. 14] Fig. 14 is a flowchart showing operation of the terminal device and the authentication device according to the second through sixth embodiments.
[Fig. 15] Fig. 15 is a flowchart showing operation of the terminal device and the authentication device according to the second through sixth embodiments.
[Fig. 16] Fig. 16 is a flowchart showing operation of normalized face image generation according to the second through sixth embodiments.
[Fig. 17] Fig. 17 is a diagram showing a method for calculating feature quantity according to the second through sixth embodiments.
[Fig. 18] Fig. 18 is a diagram showing a method for calculating authentication score according to the second through sixth embodiments.
[Fig. 19] Fig. 19 is a flowchart showing operation of an authentication device according to a fifth embodiment.
[Fig. 20] Fig. 20 is a diagram showing a rotation matrix in N-dimensional biometric information data space according to the fifth embodiment.
[Fig. 21] Fig. 21 is a block diagram showing a configuration of an authentication device according to a sixth embodiment.
[Fig. 22] Fig. 22 is a flowchart showing operation of a terminal device and the authentication device according to the sixth embodiment.

### Explanation of Signs

100: an authentication system; 101: an authentication center; 102: a user; 103: a GPS satellite; 104: a certification code; 105: a web server; 106: a meteorological bureau; 107: a weather satellite; 108: a time server; 200: a terminal device; 201: a biometric information obtaining unit; 202: a biometric information outputting unit; 203: a time information obtaining unit; 204: a time information outputting unit; 205: a location information obtaining unit; 206: a location information outputting unit; 207: a biometric information storing unit; 208: a terminal authenticating unit; 209: a measuring unit; 210: a face detecting unit; 211: a feature extracting unit; 212: a database unit; 213: an authentication processing unit; 214: a communicating unit; 215: a decrypting unit; 216: an encoding unit; 217: an encrypting unit; 251: a memory device; 252: a processing device; 253: an inputting device; 254: an outputting device; 255: a biometric authentication device; 300: an authentication server device; 301: a user specifying information storing unit 302: a user information storing unit 303: a user specifying information inputting unit; 304: a user authenticating unit; 305: a time information inputting unit; 306: a time specifying information inputting unit; 307: a location information inputting unit; 308: a location specifying information inputting unit; 309: an authentication information generating unit; 310: an information keeping unit; 311: an authentication information outputting unit; 312: an authentication information inputting unit; 313: an information searching unit; 314: a search result information outputting unit; 315: a format selecting unit; 316: a format information outputting unit; 317: a communicating unit; 318: a format generating unit; 319: an encrypting unit; 320: a decrypting unit; 321: a database unit; 322: an encoding unit; 323: an authentication processing unit; 351: a memory device; 352: a processing device; 353: an inputting device; 354: an outputting device; 901: a display device; 902: a keyboard; 903: a mouse; 904: an FDD; 905: a CDD; 906: a printer device; 907: a scanner device; 908: a picture taking device; 910: a system unit; 911: a CPU; 912: a bus; 913: a ROM; 914: a RAM; 915: a communication board; 920: a magnetic disk drive; 921: an operating system; 922: a window system; 923: a group of programs; 924: a group of files; 931: a telephone; 932: a facsimile machine; 940: the Internet; 941: a gateway; and 942: a LAN.

## Claims

1. An authentication server device comprising:
a user specifying information inputting unit inputting using an inputting device unique user specifying information which can be obtained only from a user;
a user authenticating unit authenticating using a processing device the user based on the user specifying information inputted by the user specifying information inputting unit;
a time information inputting unit inputting time information showing a time using the inputting device;
a time specifying information inputting unit inputting using the inputting device unique time specifying information which can be obtained only at a time shown by the time information inputted by the time information inputting unit;
an authentication information generating unit, when the user is authenticated by the user authenticating unit, generating authentication information by synthesizing using the processing device authentication result information showing that the user has been authenticated, the time information inputted by the time information inputting unit, and the time specifying information inputted by the time specifying information inputting unit.

2. The authentication server device of claim 1 further comprising:
an information keeping unit storing in a memory device the authentication result information, the time information, and the time specifying information which have been synthesized by the authentication information generating unit by making correspondence with the authentication information generated by the authentication information generating unit;
an authentication information outputting unit outputting using an outputting device the authentication information generated by the authentication information generating unit;
an authentication information inputting unit inputting using the inputting device the authentication information outputted by the authentication information outputting unit;
an information searching unit retrieving the authentication result information, the time information, and the time specifying information corresponding to the authentication information inputted by the authentication information inputting unit from the memory device as search result information; and
a search result information outputting unit outputting using the outputting device the search result information retrieved by the information searching unit.

3. The authentication server device of claim 2, further comprising a user information storing unit storing in the memory device user information related to the user,
wherein the authentication result information is identification information identifying the user information stored by the user information storing unit, and
wherein the information searching unit retrieves the identification information as the authentication result information corresponding to the authentication information inputted by the authentication information inputting unit, and retrieves the user information identified by the identification information retrieved, the time information and the time specifying information corresponding to the authentication information inputted by the authentication information inputting unit as the search result information from the memory device.

4. The authentication server device of claim 1, wherein the user specifying information inputting unit obtains and inputs the user specifying information from a terminal device including a biometric information obtaining unit obtaining biometric information of the user, a terminal authenticating unit authenticating the user based on the biometric information obtained by the biometric information obtaining unit, and a biometric information outputting unit outputting the biometric information obtained by the biometric information obtaining unit as the user specifying information when the user is authenticated by the terminal authenticating unit.

5. The authentication server device of claim 4,
wherein the user specifying information inputting unit obtains the biometric information from each terminal device out of a plurality of terminal devices, and
wherein the biometric information differs from one terminal device to another in at least one of accuracy and type.

6. The authentication server device of claim 4, further comprising:
a format selecting unit selecting using the processing device a format of the biometric information to be outputted by the biometric information outputting unit; and
a format information outputting unit outputting using the outputting device format information showing the format selected by the format selecting unit,
wherein the biometric information outputting unit of the terminal device converts the biometric information obtained by the biometric information obtaining unit to the format shown by the format information outputted by the format information outputting unit and outputs it, and
wherein the user authenticating unit converts using the processing device the user specifying information inputted by the user specifying information inputting unit from the format selected by the format selecting unit to an original format, and authenticates the user based on the user specifying information converted.

7. The authentication server device of claim 6, wherein the format selecting unit, in selecting a format of biometric information to be outputted by the biometric information outputting unit of a same terminal device again, selects a format corresponding to a matrix obtained by rotating a matrix corresponding to the format selected previously by 90 degrees on vector space.

8. The authentication server device of claim 1, further comprising:
a location information inputting unit inputting location information showing a location using the inputting device; and
a location specifying information inputting unit inputting using the inputting device unique location specifying information which can be obtained only at the location shown by the location information inputted by the location information inputting unit,
wherein the authentication information generating unit generates the authentication information by synthesizing the authentication result information showing that the user has been authenticated, the time information inputted by the time information inputting unit, the time specifying information inputted by the time specifying information inputting unit, the location information inputted by the location information inputting unit, and the location specifying information inputted by the location specifying information inputting unit.

9. An authentication server device comprising:
a user specifying information inputting unit inputting using an inputting device unique user specifying information which can be obtained only from a user;
a user authenticating unit authenticating using a processing device the user based on the user specifying information inputted by the user specifying information inputting unit;
a location information inputting unit inputting location information showing a location using the inputting device;
a location specifying information inputting unit inputting using the inputting device unique location specifying information which can be obtained only at the location shown by the location information inputted by the location information inputting unit; and
an authentication information generating unit, when the user is authenticated by the user authenticating unit, generating authentication information by synthesizing using the processing device authentication result information showing that the user has been authenticated, the location information inputted by the location information inputting unit, and the location specifying information inputted by the location specifying information inputting unit.

10. A terminal device comprising:
a biometric information obtaining unit obtaining biometric information of a user using a biometric authentication device;
a terminal authenticating unit authenticating using a processing device the user based on the biometric information obtained by the biometric information obtaining unit;
a biometric information outputting unit outputting using an outputting device the biometric information obtained by the biometric information obtaining unit as the user specifying information to an authentication server device including a user specifying information inputting unit inputting unique user specifying information which can be obtained only from the user and a user authenticating unit authenticating the user based on the user specifying information inputted by the user specifying information inputting unit when the user is authenticated by the terminal authenticating unit.

11. The terminal device of claim 10, further comprising:
a biometric information storing unit storing valid biometric information of the user in a memory device,
wherein the biometric information obtaining unit obtains the biometric information of the user at least two times,
wherein the terminal authenticating unit, every time the biometric information of the user is obtained by the biometric information obtaining unit, generates authentication rate information by quantifying using the processing device a rate of matching between the biometric information obtained by the biometric information obtaining unit and the biometric information stored by the biometric information storing unit, and
wherein the biometric information outputting unit selects using the processing device and outputs the biometric information obtained by the biometric information obtaining unit based on the authentication rate information calculated by the terminal authenticating unit.

12. The terminal device of claim 10, wherein the biometric information outputting unit thins and outputs the biometric information obtained by the biometric information obtaining unit.

13. The terminal device of claim 10,
wherein the authentication server device further includes a format selecting unit selecting a format of the biometric information to be outputted by the biometric information outputting unit; and a format information outputting unit outputting format information showing the format selected by the format selecting unit, and
wherein the biometric information outputting unit converts using the processing device to the format shown by the format information outputted by the format information outputting unit and outputs the biometric information obtained by the biometric information obtaining unit.

14. An authentication system comprising an authentication server device of claim 4 and a terminal device of claim 10.

15. An authentication system comprising an authentication server device of claim 6 and a terminal device of claim 13.

16. An authentication method comprising:
by a user specifying information inputting unit of an authentication server device, obtaining from a terminal device and inputting unique user specifying information which can be obtained only from a user;
by a user authenticating unit of the authentication server device, authenticating using a processing device of the authentication server device the user based on the user specifying information inputted by the user specifying information inputting unit ;
by a time information inputting unit of the authentication server device, obtaining from the terminal device and inputting time information showing a time;
by a time specifying information inputting unit of the authentication server device, inputting unique time specifying information which can be obtained at the time shown by the time information inputted by the time information inputting unit; and
by an authentication information generating unit of the authentication server device, when the user is authenticated by the user authenticating unit, generating authentication information by synthesizing using the processing device of the authentication server device authentication result information showing that the user has been authenticated, the time information inputted by the time information inputting unit, and the time specifying information inputted by the time specifying information inputting unit.

17. The authentication method of claim 16, further comprising:
by an information keeping unit of the authentication server device, storing in a memory device of the authentication server device the authentication result information, the time information, and the time specifying information which have been synthesized by the authentication information generating unit by making correspondence with the authentication information generated by the authentication information generating unit;
by an authentication information outputting unit of the authentication server device, outputting the authentication information generated by the authentication information generating unit to the terminal device;
by an authentication information inputting unit of the authentication server device, obtaining from the terminal device and inputting the authentication information outputted by the authentication information outputting unit;
by an information searching unit of the authentication server device, retrieving the authentication result information, the time information, and the time specifying information corresponding to the authentication information inputted by the authentication information inputting unit from the memory device of the authentication server device as search result information; and
by a search result information outputting unit of the authentication server device, outputting to the terminal device the search result information retrieved by the information searching unit.

18. The authentication method of claim 17, further comprising:
by a user information storing unit of the authentication server device, storing in the memory device of the authentication server device user information related to the user,
wherein the authentication result information is identification information identifying the user information stored by the user information storing unit, and
wherein the information searching unit of the authentication server device retrieves the identification information as the authentication result information corresponding to the authentication information inputted by the authentication information inputting unit, and retrieves from the memory device of the authentication server device the user information identified by the identification information retrieved, the time information and the time specifying information corresponding to the authentication information inputted by the authentication information inputting unit as the search result information.

19. The authentication method of claim 16,
the authentication server method further comprising:
by a biometric information obtaining unit of the terminal device, obtaining the biometric information of the user;
by a terminal authenticating unit of the terminal device, authenticating using a processing device of the terminal device the user based on the biometric information obtained by the biometric information obtaining unit; and
by a biometric information outputting unit of the terminal device, when the user has been authenticated by the terminal authenticating unit, outputting the biometric information obtained by the biometric information obtaining unit to the authentication server device as the user specifying information,
wherein the user specifying information inputting unit of the authentication server device obtains from the terminal device and inputs the user specifying information.

20. The authentication method of claim 19,
wherein the user specifying information inputting unit of the authentication server device obtains the biometric information from each terminal device out of a plurality of terminal devices, and
wherein the biometric information differs from one terminal device to another in at least one of accuracy and type.

21. The authentication method of claim 19, further comprising:
by a biometric information storing unit of the terminal device, storing in a memory device of the terminal device valid biometric information of the user,
wherein the biometric information obtaining unit of the terminal device obtains the biometric information of the user at least two times,
wherein the terminal authenticating unit of the terminal device, every time the biometric information of the user is obtained by the biometric information obtaining unit, generates authentication rate information by quantifying using the processing device of the terminal device a rate of matching between the biometric information obtained by the biometric information obtaining unit and the biometric information stored by the biometric information storing unit, and
wherein the biometric information outputting unit of the terminal device selects using the processing device of the terminal device and outputs to the authentication server device the biometric information obtained by the biometric information obtaining unit based on the authentication rate information calculated by the terminal authenticating unit.

22. The authentication method of claim 19, wherein the biometric information outputting unit of the terminal device thins and outputs the biometric information obtained by the biometric information obtaining unit.

23. The authentication method of claim 19,
the authentication server method further comprising:
by a format selecting unit of the authentication server device, selecting using the processing device of the authentication server device a format of the biometric information to be outputted by the biometric information outputting unit; and
by a format information outputting unit of the authentication server device, outputting format information showing the format selected by the format selecting unit to the terminal device,
wherein the biometric information outputting unit of the terminal device converts using the processing device of the terminal device the biometric information obtained by the biometric information obtaining unit to the format shown by the format information outputted by the format information outputting unit and outputs it to the authentication server device, and
wherein the user authenticating unit of the authentication server device converts using the processing device of the authentication server device the user specifying information inputted by the user specifying information inputting unit from the format selected by the format selecting unit to an original format and authenticates the user based on the user specifying information converted.

24. The authentication method of claim 23, wherein the format selecting unit of the authentication server device, in selecting a format of biometric information to be outputted by the biometric information outputting unit of a same terminal device again, selects a format corresponding to a matrix obtained by rotating a matrix corresponding to the format selected previously by 90 degrees on vector space.

25. The authentication method of claim 16,
the authentication server method further comprising:
by a location information inputting unit of the authentication server device, obtaining from the terminal device and inputting location information showing a location; and
by a location specifying information inputting unit of the authentication server device, inputting unique location specifying information which can be obtained only at the location shown by the location information inputted by the location information inputting unit,
wherein the authentication information generating unit of the authentication server device generates the authentication information by synthesizing authentication result information showing that the user has been authenticated, the time information inputted by the time information inputting unit, the time specifying information inputted by the time specifying information inputting unit, the location information inputted by the location information inputting unit, and the location specifying information inputted by the location specifying information inputting unit.

26. An authentication method comprising:
by a user specifying information inputting unit of an authentication server device, obtaining from a terminal device and inputting unique user specifying information which can be obtained only from a user;
by a user authenticating unit of the authentication server device, authenticating using a processing device of the authentication server device the user based on user specifying information inputted by the user specifying information inputting unit;
by a location information inputting unit of the authentication server device, obtaining from the terminal device and inputting location information showing a location;
by a location specifying information inputting unit of the authentication server device, inputting unique location specifying information which can be obtained only at the location shown by the location information inputted by the location information inputting unit; and
by an authentication information generating unit of the authentication server device, when the user is authenticated by the user authenticating unit, generating authentication information by synthesizing using the processing device of the authentication server device authentication result information showing that the user has been authenticated, the location information inputted by the location information inputting unit, and the location specifying information inputted by the location specifying information inputting unit.
